# EUROPÄISCHE PATENTSCHRIFT

(11) **EP 3 529 304 B1**
(45) Veröffentlichungstag und Bekanntmachung des Hinweises auf die Patenterteilung: **23.12.2020**
(21) Anmeldenummer: 17718541.0
(22) Anmeldetag: 21.04.2017
(51) Int. Cl.: C08J 9/36, B29C 44/56, B29C 64/106, B33Y 10/00

(54) **VERFAHREN ZUR HERSTELLUNG EINES EINE INTERNE STRUKTUR AUFWEISENDEN SCHAUMKÖRPERS**
METHOD FOR PRODUCING A FOAM BODY HAVING AN INTERNAL STRUCTURE
PROCÉDÉ DE FABRICATION D'UN CORPS EN MOUSSE PRÉSENTANT UNE STRUCTURE INTERNE

(30) Priorität: 18.10.2016 EP 16194265
(43) Veröffentlichungstag der Anmeldung: 28.08.2019
(73) Patentinhaber: Covestro Deutschland AG, 51373 Leverkusen (DE)
(72) Erfinder: ACHTEN, Dirk, 51375 Leverkusen (DE); HEIL, Rebecca, Alina, 40545 Düsseldorf (DE); ALBACH, Rolf, 51061 Köln (DE); EHLERS, Michael, 47829 Krefeld (DE); CLASEN, Dorothee, 50939 Köln (DE); PRAET, Sascha, 50674 Köln (DE); PAJONK, Adam, 48149 Münster (DE)
(74) Vertreter: Levpat
(86) Internationale Anmeldenummer: PCT/EP2017/059526
(87) Internationale Veröffentlichungsnummer: WO 2018/072891

(56) Entgegenhaltungen:
- WO-A1-87/01775
- WO-A1-2005/063864

## Beschreibung

Die vorliegende Erfindung betrifft ein Verfahren zur Herstellung eines eine interne Struktur aufweisenden Schaumkörpers, umfassend die Injektion, mittels eines Injektionsmittels, einer vorbestimmten Menge einer Schmelze eines polymeren Materials oder einer vorbestimmten Menge einer zu einem polymeren Material reagierenden Reaktionsmischung in einen vorbestimmten Ort eines Schaumkörpers, entsprechend einem Volumenelement der internen Struktur. Die Erfindung betrifft ebenfalls ein durch das erfindungsgemäße Verfahren erhältlichen Schaumkörper mit einer internen Struktur.

Die Modifikation von Schaumstoffen durch Einbringen von anderen Materialien in den Schaumstoff ist grundsätzlich bekannt. Bei der Modifikation kann es sich beispielsweise um eine Reparatur, eine mechanische Verstärkung, eine Veränderung der Dämpfungseigenschaften oder eine Verbesserung des Brennverhaltens handeln.

DE 20 2010 014376 U1 beschäftigt sich mit Kunststoff-Schalentechnik und hat sich die Aufgabe gestellt, einen Verbundwerkstoff und eine Anordnung mit dem Verbundwerkstoff, mit denen eine leichte und stabile Stützstruktur erreicht wird, bereitzustellen. Offenbart wird ein Verbundwerkstoff mit einer dreidimensionalen Schwammstruktur, insbesondere einem Schwammmaterial oder schwammartigen Material, und einem Verbindungsmaterial, das die Schwammstruktur bindet und/oder stabilisiert. Das Verbindungsmaterial kann ein Kunststoffmaterial, insbesondere ein Harzmaterial sein oder aufweisen, insbesondere Polyesterharz oder Epoxidharz.

WO 2012/148915 A2 betrifft das Gebiet der Polstermaterialien und offenbart ein Polsterelement, umfassend einen atmungsfähigen porösen Schaum umfassend eine Reihe von miteinander verbundenen Zellwänden, wodurch ein offenporiges Netzwerk definiert wird und umfassend ein elastomeres Material, welches über wenigstens einem Teil der miteinander verbundenen Zellwänden gebildet ist. Das elastomere Material umfasst ein elastomeres Polymer und einen Weichmacher, wobei ein Gewichtsverhältnis von Weichmacher zu elastomerem Polymer 0.1 bis 50 beträgt. Der atmungsfähige poröse Schaum ist eingerichtet, um Gase den Durchtritt durch wenigstens einen Teil des offenporigen Netzwerks benachbart zu dem elastomeren Material zu gestatten.

WO 03/020504 A1 beschreibt ein Verfahren zur Herstellung eines Polyolefin-infundierten porösen Materials, umfassend: (a) Mischen einer Olefinmonomer-Harzformulierung mit einem Metathesekatalysator, um eine katalysierte Harzformulierung zu erhalten; (b) Infundieren der Mischung in ein poröses Material, wobei das poröse Material ausgewählt ist aus der Gruppe bestehend aus Holz, Zement, Beton, offenzelligen und netzförmigen Schäumen und Schwämmen, Papiere, Pappen, Filze, Seile oder Geflechte natürlicher oder synthetischer Fasern und gesinterten Materialien; die Mischung dringt in die Poren des porösen Materials ein; (c) Härten der katalysierten Harzformulierung innerhalb des porösen Materials.

EP 2 886 302 A2 betrifft die Gestaltung sowie die Herstellung von in Dickenrichtung des Kernverbundes durchsetzenden Armierungselementen zur Verstärkung von Kernverbundstrukturen. Das dort offenbarte Verfahren zur Herstellung verstärkter Kernverbunde weist die Schritte auf: Einbringen eines Stiftes in einen schaum- oder gefüllten bienenwabenförmigen Kernwerkstoff, wobei der Stift und der Kernwerkstoff einen thermoplastischen Kunststoff oder eine Mischung thermoplastischer Kunststoffe enthalten; und der Stift derartig erhitzt wird, dass der Kernwerkstoff beim Einbringen des Stiftes an der Einbringstelle erweicht oder schmilzt; und/oder der Kernwerkstoff an der Einbringstelle erhitzt wird, so dass der Kernwerkstoff erweicht oder schmilzt. WO 2015/066528 A1 offenbart ein Kompositmaterial mit einem Elastizitätsmodul von weniger als 0.1 MPa bei 100% Dehnung, aufweisend eine Polymermatrix und ein nicht-Newtonsches Fluid. Das Kompositmaterial kann in Schock- und Aufprallabsorptionsanwendungen eingesetzt werden, um Anfangs- und durch Schockwellen hervorgerufene Beschleunigungskräfte zu verringern.

WO 2005/063864 A1 offenbart ein Verfahren zur Herstellung eines eine interne Struktur aufweisenden Schaumkörpers, bei dem von einem eine interne Hohlraum-Struktur aufweisenden Schaumkörper ausgegangen wird und in diese Hohlraum-Struktur ein polymeres Material wie ein Polyurethanpolymer injiziert wird, etwa durch Injektion einer entsprechenden Reaktionsmischung. Der offenbarte Schaumkörper ist insbesondere zur Verwendung in Schuhen vorgesehen, etwa in Schuhsohlen.

Die meisten bisherigen Verfahren zur Modifizierung von Schaumstoffen sind eher unspezifisch und eignen sich nicht zum Aufbau von komplexen Strukturen innerhalb des Schaumstoffs. Dann müsste folglich die komplexe Struktur zunächst bereitgestellt werden und dann umschäumt werden. So offenbart WO 87/01775 A1 ein Federelement mit mindestens zwei Grundteilen und einer Reihe von stoßabsorbierenden gekrümmten Elementen, die sich zwischen den Grundteilen erstrecken und an diesen durch Einformen integral befestigt sind. Die genannten Grundteile sind als abgelängte Hohlprofile mit einer Anzahl von Öffnungen zur Aufnahme der gekrümmten Elemente ausgeführt, wobei die gekrümmten Elemente einen Durchmesser haben, der kleiner ist als derjenige der genannten Öffnungen, damit die Elemente mit einem gewünschten vorgegebenen Winkel in den genannten Öffnungen liegen können. Der Hohlraum der Profile ist mit einer Formmasse gefüllt. Das genannte Federelement kann in einen Schaum eingebettet sein, vorzugsweise einen Polyurethanschaum oder Polyethylenschaum.

Das Einbetten in einen Schaum bedingt einen Zugang zu Schäumanlagen mit all ihren Kapital- und Sicherheitsanforderungen. Um angesichts der aufsteigenden, zu einem Schaum führenden Reaktionsmischung eine vorbestimmte Orientierung der Strukturen im fertigen Schaum zu erreichen, müssten diese fixiert werden. Solche Fixierungselemente würden dann bis an die äußere Oberfläche des Schaums reichen, was aus mechanischen und ästhetischen Gründen unerwünscht sein kann. Ein weiterer Aspekt ist, dass beim Umschäumen von geschlossenen Strukturen die Hohlräume der Strukturen nicht vom Schaum ausgefüllt werden können.

Es wäre für die Herstellung von mit spezifischen inneren Strukturen funktionalisierten Schäumen wünschenswert, wenn Schaum-Rohware eingekauft und anschließend funktionalisiert werden könnte. Die vorliegende Erfindung hat sich folglich die Aufgabe gestellt, ein solches Verfahren zur Herstellung eines eine interne Struktur aufweisenden Schaumkörpers bereitzustellen.

Erfindungsgemäß gelöst wird die Aufgabe durch ein Verfahren gemäß Anspruch 1. Ein durch das erfindungsgemäße Verfahren erhältlicher, eine interne Struktur aufweisender Schaumkörper ist Gegenstand des Anspruchs 15. Vorteilhafte Weiterbildungen sind in den Unteransprüchen angegeben.

Ein erfindungsgemäßes Verfahren zur Herstellung eines eine interne Struktur aufweisenden Schaumkörpers umfasst die Schritte:
I) Auswählen einer in dem Schaumkörper zu bildenden internen Struktur, wobei die Struktur ein erstes polymeres Material umfasst;
II) Bereitstellen eines Schaumkörpers, wobei der Schaumkörper ein zweites polymeres Material umfasst, welches von dem ersten polymeren Material verschieden ist;
III) Injektion, mittels eines Injektionsmittels, einer vorbestimmten Menge einer Schmelze des ersten polymeren Materials oder einer vorbestimmten Menge einer zu dem ersten polymeren Material reagierenden Reaktionsmischung an einen vorbestimmten Ort innerhalb des Schaumkörpers, entsprechend einem Volumenelement der internen Struktur;
IV) Wiederholen des Schritts III) für weitere vorbestimmte Orte innerhalb des Schaumkörpers, entsprechend weiteren Volumenelementen der internen Struktur, bis die interne Struktur gebildet ist,
wobei die Injektion in Schritt III) nicht in im Schaum des Schaumkörpers bereits vorliegende, der Form des Volumenelements oder der internen Struktur entsprechende Hohlräume erfolgt.

Ein eine interne Struktur aufweisender Schaumkörper, erhältlich durch ein erfindungsgemäßes Verfahren, wobei die interne Struktur ein erstes polymeres Material umfasst und der Schaumkörper ein zweites polymeres Material umfasst und das Material der internen Struktur von dem Material des Schaumkörpers verschieden ist, zeichnet sich dadurch aus, dass sämtliche Oberflächen der internen Struktur den Schaumkörper kontaktieren, die interne Struktur eine Feder mit einer Belastungsrichtung ist und dass bei Belastung des Schaumkörpers an einem Ort, an dem die interne Struktur vorliegt und entlang der Belastungsrichtung der internen Struktur die ermittelte Stauchhärte (40% Stauchung, DIN EN ISO 3386-1:2010-09) ≥ 10% bis ≤ 10000% höher ist als die Stauchhärte (40% Stauchung, DIN EN ISO 3386-1:2010-09) des Schaumkörpers an einem Ort, an dem keine interne Struktur vorliegt.

Die vorliegende Erfindung ist insbesondere für die Modifikation von Weichschaumkörpern geeignet, wie sie in Matratzen oder Polstern zum Einsatz kommen. Mehrzonen-Weichschaumkörper sind aufwendig und kostenintensiv herzustellen, da in mehreren Arbeitsschritten unterschiedliche Schäume und Einlagen aufeinander geklebt werden müssen. Abgesehen davon haben diese Herstellungsverfahren nur eine begrenzte Möglichkeit der individuellen Anpassung an Personen oder Objekte.

Im Vergleich zu herkömmlichen Verfahren können durch das erfindungsgemäße Verfahren Produkte wie Mehrzonen-Matratzen einfacher und kostengünstiger hergestellt werden, da zahlreiche Verarbeitungsschritte in einem einzigen Schritt vereint werden. Weitere Funktionalitäten können in Schaumobjekte integriert werden, die zudem durch die Verwendung von digitalen Fertigungsprozessen mit geringem Mehraufwand individuell angepasst werden können.

Durch injizierte Muster und Strukturen kann das Verhalten von Schäumen bei Krafteinwirkung bestimmt werden, so dass nur zuvor definierte Verformungen zugelassen werden. Es ist ferner möglich, durch injizierte Muster den Schaum so zu kennzeichnen, dass eine Produktfälschung erschwert wird.

Dieses Verfahren ermöglicht somit einerseits Kosteneinsparungen und Prozessverbesserungen für bereits etablierte (Weich-)Schaumanwendungen und andererseits die Injektion komplexer und individualisierter Formen, welche völlig neue Anwendungsbereiche für die Verwendung von Weichschäumen eröffnen.

Schritt (I) des erfindungsgemäßen Verfahrens beinhaltet die Auswahl einer in dem Schaumkörper zu bildenden internen Struktur. Diese Auswahl erfolgt zweckmäßigerweise in einem CAD-Programm, welches ein dreidimensionales Modell der Struktur bereitstellt und in diesem dreidimensionalen Modell die Struktur in einzelne Volumenelemente unterteilt.

Die interne Struktur kann beispielsweise eine Länge von ≥ 0,1 mm bis ≤ 5000 cm, bevorzugt ≥ 0,5 mm bis ≤ 1000 cm, mehr bevorzugt ≥ 1 cm bis ≤ 100 cm aufweisen.

Ein Beispiel für eine solche Struktur, welche in dem Schaumkörper gebildet werden soll, ist eine Schraubenfeder. Solche Schraubenfedern können beispielsweise in Matratzen oder Kissen vorgesehen sein, so dass lokal Bereiche mit einer erhöhten Stauchhärte gebildet werden. Weitere Beispiele für geeignete Strukturen sind solche, die die Fixierung des Schaumkörpers erleichtern. Hierbei kann es sich im einfachsten Fall um massive Volumina handeln, in die beispielsweise nachträglich Gewinde zur Aufnahme einer Schraubenverbindung geschnitten werden.

Es ist erfindungsgemäß vorgesehen, dass die zu bildende interne Struktur ein erstes polymeres Material umfasst. Geeignet sind beispielsweise thermoplastisch verarbeitbare Kunststoffformulierungen auf der Basis von Polyamiden, Polyurethanen, Polyestern, Polyethern, Polyimiden, Polyetherketonen, Polycarbonaten, Polyacrylaten, Polyolefinen, Polyvinylchlorid, Polyoxymethylen und/oder vernetzten Materialien auf der Basis von Polyepoxiden, Polyurethanen, Polysilikonen, Polyacrylaten, Polyestern, Gummimaterialien sowie deren Mischungen und Mischpolymerisate.

Das erste polymere Material kann in massiver Form oder als Schaum vorliegen. Wenn das erste polymere Material ein Schaum ist, lassen sich Gewichtsersparnisse realisieren.

Gemäß einem Aspekt der Erfindung besonders geeignet als erstes polymeres Material sind thermoplastische Elastomere (TPE), thermoplastisches Polyurethan (TPU), Polycarbonat (PC), Polyamid (PA), Polyethylentherephtalat (PET), Polybutylentherephthalat (PBT), cycloolefinische Copolyester (COC), Polyetheretherketon (PEEK), Polyetheramidketon (PEAK), Polyetherimid (PEI), Polyimid (PI), Polypropylen (PP) oder Polyethylen (PE), Acrylnitril-Butadien-Styrol (ABS), Polylactat (PLA), Polymethylmethacrylat (PMMA), Polystyrol (PS), Polyvinylchlorid (PVC), Polyoxymethylen (POM), Polyacrylnitril (PAN), Polyacrylat oder Zelluloid. Bevorzugt sind TPU oder PC.

Gemäß einem weiteren Aspekt der Erfindung besonders geeignet zum Aufbau des ersten polymeren Materials sind reaktiv-härtende 2K Polyurethan-, 2K Epoxid- oder feuchtigkeitshärtende Polyurethan-Systeme, lufthärtende oder radikalisch härtende ungesättigte Polyester oder UVhärtende Reaktivharze beispielsweise auf der Basis von Vinyl- und Acrylverbindungen, wie sie u.a. in EP 2 930 009 A2 und DE 10 2015100 816 beschrieben sind.

Schritt (II) des Verfahrens beinhaltet das Bereitstellen eines Schaumkörpers, wobei der Schaumkörper ein zweites polymeres Material umfasst, welches von dem ersten polymeren Material verschieden ist. Hierbei kann es sich auch beispielsweise um einen Thermoplast-Schaum, einen Polyurethanharz-Schaum, einen Epoxidharz-Schaum, einen Polyesterharz-Schaum, einen Gummischaum, einen Acrylatharz-Schaum oder um einen Polyolefinharz-Schaum handeln. Es ist möglich, dass interne Struktur und Schaumkörper ein Material aus der gleichen Stoffklasse beinhalten, die Materialien an sich jedoch chemisch verschieden sind. Ein Beispiel ist ein Schaumkörper aus einem Polyurethan-Weichschaum und eine Struktur aus einem elastomeren Polyurethan. Die Verschiedenheit der polymeren Materialien kann sich auch in einer Verschiedenheit mindestens einer physikalischen Eigenschaft äußern. Beispielsweise kann das erste polymere Material ein Polymerschaum sein, welcher aus den gleichen Aufbaukomponenten erhalten wird wie der Schaum des zweiten polymeren Materials, jedoch eine andere Dichte aufweist.

Gemäß Schritt (III) des Verfahrens wird mittels eines Injektionsmittels eine vorbestimmte Menge einer Schmelze des ersten polymeren Materials oder eine vorbestimmte Menge einer zu dem ersten polymeren Material reagierenden Reaktionsmischung an einen vorbestimmten Ort innerhalb des Schaumkörpers. Ein Beispiel für ein Injektionsmittel ist eine Kanüle. Geeignete Innendurchmesser können im Bereich von ≥ 50 µm bis ≤ 5 mm liegen, vorzugsweise ≥ 100 µm bis ≤ 4 mm, mehr bevorzugt ≥ 500 µm bis ≤ 2,5 mm.

Im Fall eines thermoplastischen Polymers wird eine Schmelze des Polymers injiziert. Es ist aber auch möglich, Reaktivharze als Einkomponenten- oder Mehrkomponentensysteme einzusetzen, in denen eine Reaktionsmischung zu dem gewünschten polymeren Material reagiert. Die Reaktionsmischung kann fertig gemischt durch die Kanüle injiziert werden oder aber, durch die Verwendung beispielsweise einer Kanüle mit mehreren Leitungen, erst im Schaumkörper gemischt werden.

Das zur Injektion vorgesehene Material für ein Volumenelement der aufzubauenden internen Struktur kann kontinuierlich oder zeitlich unterbrochen injiziert werden. Je nach Beschaffenheit des Schaums kann das injizierte Material den Schaum lokal zerstören und an Stelle des Schaums treten oder aber den Schaum verdrängen.

Im erfindungsgemäßen Verfahren erfolgt die Injektion des Materials nicht in im Schaum bereits vorliegende, der Form des Volumenelements oder der internen Struktur entsprechende Hohlräume. Dieses ist ein Vorteil des erfindungsgemäßen Verfahrens, da die vorgelagerten Schritte zur Bereitstellung der aufzufüllenden Hohlräume entfallen. Es kann ein hinsichtlich seiner inneren Struktur unmodifizierter offen- oder geschlossenzelliger Schaum eingesetzt werden.

Die injizierte Menge an Material wird durch den umgebenden Schaum des Schaumkörpers gestützt und kann somit an dem ihm zugedachten Ort verbleiben. Die injizierte Menge an Material entspricht, auch mit ihrer Lage im Schaumkörper, einem Volumenelement der zu bildenden internen Struktur. Im Gegensatz zu schichtweise arbeitenden additiven Fertigungsverfahren wie SLS oder FDM ist das erfindungsgemäße Verfahren nicht auf den schichtweisen Aufbau der Struktur beschränkt, sondern kann aufgrund der Stützwirkung des Schaums das Positionieren des Materials für die Struktur viel freier gestalten.

Während der Injektion in Schritt III) kann das Injektionsmittel relativ zum Schaumkörper stationär oder in Bewegung sein. Ist das Injektionsmittel in Bewegung, lassen sich größere Volumenelemente pro Injektionsvorgang aufbauen. Vorzugsweise ist dann die Bewegung des Injektionsmittels entgegengesetzt zu der Bewegungsrichtung, in der das Injektionsmittel in den Schaumkörper eingedrungen ist.

Nach der Injektion in Schritt III) kann ein durch das Injektionsmittel im Schaum hervorgerufener Injektionskanal wieder verschlossen werden. Dieses kann durch Eintragen eines Klebstoffs oder einer Reaktionsmischung, welche zu einem Polymerschaum reagiert, in den Injektionskanal erreicht werden. Vorzugsweise handelt es sich um eine Reaktionsmischung, welche mit oder ohne Treibmittel zu dem Polymer des zweiten polymeren Materials reagiert.

Die Injektion in Schritt III) wird vorzugsweise mit Hilfe eines mehrachsigen Roboters wie eines 6-Achsen-Roboters durchgeführt. So kann ein 6-Achsen-Roboterarm ein Injektionsmittel nach zuvor am Computer erzeugten Pfaden bewegen und Muster und Formen in den Schaumkörper injizieren.

Der Weg der Injektion in Schritt III) ist nicht auf eine bestimmte Raumrichtung festgelegt. Es ist möglich, dass die einzelnen Injektionen aus möglichst verschiedenen Richtungen stattfinden. Ist das Injektionsmittel eine Kanüle, hieße das, dass der Schaumkörper gleichmäßig verteilt durchstochen wird und keine lokale Anhäufung von parallel zueinander verlaufenden Einstichkanälen und somit eine lokale Schwächung oder Zerstörung des Schaums auftritt. Es ist aber auch möglich, dass eine mittels Durchstechen des Schaumkörpers durch das Injektionsmittel hervorgerufene lokale Schwächung oder Zerstörung des Schaum-Materials als konstruktives Merkmal für den eine interne Struktur umfassenden Schaumkörper benutzt wird.

Gemäß der Anweisung in Schritt IV) des Verfahrens wird der Injektionsschritt III) an weiteren vorbestimmte Orte innerhalb des Schaumkörpers wiederholt, so dass weitere Volumenelemente der zu bildenden internen Struktur im Schaumkörper durch Materialinjektion abgebildet werden. Dieses geschieht so lange, bis die Zielstruktur gebildet ist.

Die interne Struktur kann zum Beispiel ein subtile oder deutliche haptische Änderung der Eigenschaften des modifizierten Schaumkörpers bewirken, die sich zum Beispiel in Form von einer veränderten Dämpfungscharakteristik, Oberflächenrauigkeit oder Schaumoberflächenstruktur unter Last bemerkbar macht. So sei die Injektion von kleinen Volumenkörpern eines Materials mit höherer Dichte als der Schaum direkt unter der Schaumoberfläche genannt, die zur einer Verbesserung der Luftzirkulation in der Schaumfläche unter Last führen kann.

Die Dichte des Schaumkörpers kann durch das erfindungsgemäße Verfahren räumlich gezielt, aber auf das Schaumvolumen insgesamt bezogen, beispielsweise um > 0,5% bis < 1000% erhöht werden.

Bevorzugte Ausführungsformen der Erfindung werden nachfolgend erläutert. Sie können beliebig miteinander kombiniert werden, sofern sich aus dem Kontext nicht eindeutig das Gegenteil ergibt.

In einer bevorzugten Ausführungsform des Verfahrens verbinden sich in zwei aufeinanderfolgenden Schritten III) die injizierten Schmelzen oder die injizierten Reaktionsmischungen zumindest teilweise zu einem gemeinsamen Volumenelement miteinander. Im Fall der Injektion einer Polymerschmelze lässt sich der Umstand nutzen, dass der Schaumkörper als thermische Isolierung wirkt. Dann wird das Koaleszieren der in den einzelnen Injektionsschritten injizierten Polymerschmelze erleichtert.

In einer weiteren bevorzugten Ausführungsform des Verfahrens wird eine Mehrzahl von voneinander verschiedenen ersten polymeren Materialien eingesetzt. Beispielsweise können 2, 3, 4 oder 5 voneinander verschiedene erste polymere Materialien im erfindungsgemäßen Verfahren eingesetzt werden, wobei diese auch durch unterschiedliche Applikationsarten (Polymerschmelze/Reaktionsmischung) injiziert werden können. Die verschiedenen ersten polymeren Materialien können zueinander kompatibel sein, was bedeutet, dass sie untereinander eine stoffschlüssige Verbindung eingehen können. Sie können aber auch absichtlich zueinander inkompatibel sein, wenn beispielsweise gegeneinander bewegliche Teile einer Struktur aufgebaut werden sollen.

In einer weiteren bevorzugten Ausführungsform des Verfahrens wird eine Mehrzahl von voneinander verschiedenen Injektionsmitteln eingesetzt. Im Prinzip ist die Anzahl der verschiedenen Injektionsmittel nur durch die Geometrie des Schaumkörpers und den Platzbedarf der Injektionsmittel begrenzt.

In einer weiteren bevorzugten Ausführungsform des Verfahrens wird eine Mehrzahl von in ihrem mechanischen Aufbau voneinander verschiedenen Injektionsmitteln eingesetzt. Im Prinzip ist die Anzahl der verschiedenen Injektionsmittel nur durch die Geometrie des Schaumkörpers und den Platzbedarf der Injektionsmittel begrenzt. Ein unterscheidender mechanischer Aufbau kann beispielsweise in unterschiedlichen Innendurchmessern von verwendeten Kanülen liegen.

In einer weiteren bevorzugten Ausführungsform des Verfahrens umfasst der Schaumkörper einen Weichschaum mit einer Stauchhärte (40% Stauchung, DIN EN ISO 3386-1:2010-09) von ≥ 10 bis ≤ 100 kPa und einer Dichte (DIN EN ISO 845) von ≥ 10 kg/m³ bis ≤ 100 kg/m³. Bevorzugt sind solche Stauchhärten im Bereich von ≥ 20 bis ≤ 80 kPa, mehr bevorzugt ≥ 30 bis ≤ 60 kPa. Bevorzugte Dichten sind ≥ 20 kg/m³ bis ≤ 80 kg/m³, mehr bevorzugt ≥ 30 kg/m³ bis ≤ 60 kg/m³.

In einer weiteren bevorzugten Ausführungsform des Verfahrens ist das zweite polymere Material ein Polyurethanpolymer. Vorzugsweise ist das zweite polymere Material ein Polyurethan-Weichschaum, welches erhältlich ist aus einem Reaktionsgemisch umfassend die Komponenten:

### A1

A1.1 mindestens ein Polyetherpolyol mit einer Funktionalität von 2 bis 8, vorzugsweise von 2 bis 6, besonders bevorzugt von 2 bis 4, einer OH-Zahl gemäß DIN 53240 in einem Bereich von 20 bis 70 mg KOH/g und einem Propyloxypropylen (PO)-Gehalt in einer Menge von 50 bis 100 Gew.-% und einem Polyoxyethylen (EO)-Gehalt in einer Menge von 0 bis 50 Gew.-%,
A1.2 gegebenenfalls mindestens ein Polyetherpolyol mit einer Hydroxyl-Funktionalität von 2 bis 8, vorzugsweise von 2 bis 6, besonders bevorzugt von 2, einer Hydroxyl (OH)-Zahl gemäß DIN 53240 in einem Bereich von 50 bis 65 mg KOH/g und einem PO-Gehalt in einer Menge von 45 bis 55 Gew.-% und einen EO-Gehalt in einer Menge von 45 bis 55 Gew.-%;
A1.3 gegebenenfalls mindestens eine Dispersion eines Polymers in einem Polyetherpolyol, wobei die OH-Zahl gemäß DIN 53240 der Dispersion in einem Bereich von 10 bis 30 mg KOH/g liegt und wobei das Polyetherpolyol eine Hydroxyl-Funktionalität 2 bis 6, vorzugsweise von 2 bis 4, besonders bevorzugt von 3, einen PO-Gehalt in einer Menge von 70 bis 90 Gew.-% und einen EO-Gehalt in einer Menge von 10 bis 30 Gew.-% aufweist;
A1.4 gegebenenfalls mindestens ein Polyetherpolyol mit einer Funktionalität von 2 bis 8, vorzugsweise von 2 bis 6, besonders bevorzugt von 3, einer OH-Zahl in einem Bereich von 220 bis 290 mg KOH/g und einen PO-Gehalt in einer Menge von bis zu 25 Gew.-% und einen EO-Gehalt in einer Menge von mindestens 75 Gew.-%;
A2 Wasser und/oder physikalisches Treibmittel,
A3 gegebenenfalls gegenüber Isocyanaten reaktionsfähige Wasserstoffatome aufweisende Verbindungen mit einer OH-Zahl von 140 mg KOH/g bis 900 mg KOH/g,
A4 Hilfs- und Zusatzstoffe wie Katalysatoren, oberflächenaktive Zusatzstoffe, Pigmente oder Flammschutzmittel
und

### Komponente B: Di- und/oder Polyisocyanate, vorzugsweise Diisocyanate.

Die Herstellung des PUR-Weichschaums erfolgt in der Regel bei einer NCO-Kennzahl von 70 bis 130, bevorzugt von 80 bis 115, besonders bevorzugt von 85 bis 95.

In einer weiteren bevorzugten Ausführungsform des Verfahrens ist die in Schritt I) ausgewählte interne Struktur eingerichtet, um das Verformungsverhalten des Schaumkörpers unter Zugbelastung, Druckbelastung und/oder Scherbelastung derart zu verändern, dass bei einer Verformung unter der Belastung ein Volumenelement des Schaumkörpers, welches die interne Struktur einhüllt, eine Änderung auf ein Volumen von ≥ 10% (bevorzugt ≥ 50%, mehr bevorzugt ≥ 100%) gegenüber dem Volumen eines Volumenelements des Schaumkörpers (10) erfährt, welches keine interne Struktur (100) umfasst. Die Änderung des Volumens unter Belastung kann durch FEM-Rechnung simuliert werden oder aber auch experimentell bestimmt werden. Beispielsweise können in einem Schaumkörper ein Volumenelement mit der internen Struktur von einem Ausgangsvolumen von 100 cm³ auf 75 cm³ komprimiert werden und ein Volumenelement ohne interne Struktur unter der gleichen Kompressionslast von 100 cm³ auf 50 cm³ komprimiert werden. Das Volumen des Volumenelements mit der internen Struktur beträgt nun nach der Belastung 150% des Volumens des Volumenelements ohne interne Struktur.

In einer weiteren bevorzugten Ausführungsform des Verfahrens ist die in Schritt I) ausgewählte interne Struktur eine Blattfeder, Spiralfeder, Elliptikfeder, Parabelfeder, Wellenfeder, Schenkelfeder, Stabfeder, Schraubenfeder, Tellerfeder, ein Gewinde oder eine Aufnahme für Bajonettverschlüsse.

In einer weiteren bevorzugten Ausführungsform des Verfahrens ist die in Schritt I) ausgewählte interne Struktur eine Mehrzahl von nicht miteinander verbundenen kugelförmigen, elliptischen oder stabförmigen Volumina oder eine Mehrzahl von miteinander verbundenen kugelförmigen, elliptischen oder stabförmigen Volumina. Kugelförmige Volumina können durch Injektion eines Materials ohne Bewegung der Injektionseinrichtung während des Injektionsvorgangs erreicht werden. Analog können stabförmige Volumina durch eine lineare Bewegung der Injektionseinrichtung während des Injektionsvorgangs aufgebaut werden. Der Begriff "kugelförmig" schließt Abweichungen von der idealen Kugelform mit ein, bei denen der kleinste Abstand und der größte Abstand der Oberfläche des Volumens zum geometrischen Mittelpunkt des Volumens nicht mehr als 20%, bevorzugt nicht mehr als 10%, voneinander abweichen.

Stabförmige Volumina können derart miteinander verbunden sein, dass zwei Volumina an ihren Enden aufeinander treffen und so ein "V"-förmiges Gebilde bilden. Der Winkel zwischen den Schenkeln des "V"-förmigen Gebildes kann 5° bis 85°, vorzugsweise 15° bis 60°, betragen. Es können auch mehr als zwei, beispielsweise drei oder vier, stabförmige Volumina an einem gemeinsamen Punkt aufeinander treffen. Die gebildete Figur kann so beschrieben werden, dass die stabförmigen Volumina wenigstens einen Teil der Kanten einer gedachten Pyramide bilden.

Stabförmige Volumina können auch derart miteinander verbunden sein, dass eine Mehrzahl der Volumina ein Netzwerk mit Knotenpunkten bildet. Vorzugsweise sind die Knotenpunkte in zumindest einem Teil des Volumens des Körpers periodisch wiederkehrend verteilt. Wenn die Knotenpunkte in einem Volumen periodisch wiederkehrend verteilt sind, lässt sich dieser Umstand mit den Mitteln der Kristallographie beschreiben. Die Knotenpunkte können entsprechend den 14 Bravais-Gittern angeordnet sein: kubisch-primitiv (sc, simple cubic), kubisch-raumzentriert (bcc, body centered cubic), kubisch-flächenzentriert (fcc, face centered cubic), tetragonal-primitiv, tetragonal-raumzentriert, orthorhombisch-primitiv, orthorhombisch-basiszentriert, orthorhombischraumzentriert, orthorhombisch-flächenzentriert, hexagonal-primitiv, rhomboedrisch, monoklinprimitiv, monoklin-basiszentriert und triklin. Bevorzugt sind die kubischen Gitter sc, fcc und bcc.

In der kristallographischen Betrachtungsweise bleibend kann die Anzahl der stabförmigen Volumina, über die ein Knotenpunkt mit anderen Knotenpunkten verbunden ist, als die Koordinationszahl des Knotenpunkts angesehen werden. Die durchschnittliche Anzahl der stabförmigen Volumina, die von den Knotenpunkten ausgehen, kann ≥ 4 bis ≤ 12 betragen, wobei auch in der Kristallographie nicht übliche oder nicht mögliche Koordinationszahlen realisiert werden können.

In einer weiteren bevorzugten Ausführungsform des Verfahrens ist das erste polymere Material ein Polyurethanpolymer. Vorzugsweise wird dieses Polyurethanpolymer erhalten aus einer Reaktionsmischung umfassend die folgenden Komponenten:
i) ein Polyisocyanat,
ii) gegebenenfalls ein Polyisocyanat-Prepolymer
iii) eine Verbindung mit mindestens zwei isocyanatreaktiven Gruppen, bevorzugt Hydroxygruppen.

Als Polyisocyanat und Komponente i) eignen sich beispielsweise 1,4-Butylendiisocyanat, 1,6 Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente i).

In einer Ausführungsform kann die Komponente i) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Besonders bevorzugt können als Komponente i) Polyisocyanate auf der Basis von Hexamethylendiisocyanat, Isophorondiisocyanat oder die isomeren Bis-(4,4'-isocyanatocyclohexyl) methane sowie Mischungen der vorgenannten Diisocyanate eingesetzt werden.

Die als Komponente ii) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂- und/oder NH-funktionelle Komponenten) für die Bildung des Polyisocyanat-Prepolymers eingesetzt werden.

Das Polyisocyanat-Prepolymer als Komponente ii) kann bevorzugt aus der Umsetzung von polymeren Polyolen und aliphatischen Diisocyanaten erhältlich sein. Bevorzugt sind dabei als Komponente ii) Polyisocyanat-Prepolymere auf Basis von Polypropylenglykol als Polyol und Hexamethylendiisocyanat als aliphatischem Diisocyanat.

Hydroxyfunktionelle, polymere Polyole für die Umsetzung zum Polyisocyanat-Prepolymer B) können beispielsweise auch Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere ii) können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dirnethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere ii) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewichten Mₙ von 400 g/mol bis 8000 g/mol, bevorzugt von 600 g/mol bis 3000 g/mol eingesetzt werden. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten, werden im Rahmen der vorliegenden Erfindung in bekannter Weise derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere ii) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere ii) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere ii) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester.

Ferner können zur Herstellung der Polyisocyanat-Prepolymere ii) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere ii) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere ii) eingesetzt werden.

Geeignete Komponenten zur Kettenverlängerung sind organische Di- oder Polyamine. Beispielsweise können Ethylendiamin, 1,2-Diaminopropan, 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere ii) eingesetzt werden. Beispiele hierfür sind primäre/sekundäre Amine, wie Diethanolamin, 3-Amino-l-methylaminopropan, 3-Amino-l-ethylaminopropan, 3-Amino-l-cyclohexylaminopropan, 3 - Amino-l-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketim von diprimären Ammen, primär/tertiäre Amine, wie N,N-Dimethylaminopropylamin, verwendet.

Die als Komponente ii) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 2,5 aufweisen.

Die Komponente iii) ist eine Verbindung mit mindestens zwei isocyanatreaktiven Hydroxygruppen. Beispielsweise kann Komponente iii) ein Polyamin oder ein Polyol mit mindestens zwei isocyanatreaktiven Hydroxygruppen sein.

Als Komponente iii) können hydroxyfunktionelle, insbesondere polymere, Polyole, beispielsweise Polyetherpolyole eingesetzt werden. Beispielsweise eignen sich Polytetramethylenglykolpolyether, wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Es ist bevorzugt, dass die Komponente iii) ein Polymer mit 2 bis 4 Hydroxygruppen pro Molekül, ganz besonders bevorzugt ein Polypropylenglykol mit 2 bis 3 Hydroxygruppen pro Molekül ist. Erfindungsgemäß bevorzugt haben die polymeren Polyole aus C) eine besonders enge Molekulargewichtsverteilung, das heißt eine Polydispersität (PD = M_{w}/Mₙ) von 1,0 bis 1,5 und/oder eine OH-Funktionalität von größer 1,9. Bevorzugt weisen die genannten Polyetherpolyole eine Polydispersität von 1,0 bis 1,5 und eine OH-Funktionalität von größer 1,9 auf, besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten i), ii) und iii) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02:bis 1:0,95.

Vorzugsweise besitzt zumindest eine der Komponenten i), ii) oder iii) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente i) und ii) auf die mittlere Anzahl von NCO-Gruppen pro Molekül und bei Komponente iii) auf die mittlere Anzahl von OH-Gruppen pro Molekül. Diese Verzeigung beziehungsweise Vernetzung bewirkt bessere mechanische Eigenschaften und bessere elastomere Eigenschaften, insbesondere auch bessere Dehnungseigenschaften.

Das Polyurethan kann vorteilhafterweise eine gute mechanische Festigkeit und hohe Elastizität aufweisen. Insbesondere kann das Polyurethan eine maximale Spannung von ≥ 0,2 MPa, insbesondere von 0,4 MPa bis 50 MPa, und eine maximale Dehnung von ≥ 250 %, insbesondere von ≥ 350 %, aufweisen. Darüber hinaus kann das Polyurethan im Gebrauchsdehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach DIN 53504). Ferner kann das Polyurethan ein Elastizitätsmodul bei einer Dehnung von 100 % von 0,1 MPa bis 10 MPa, beispielsweise von 0,2 MPa bis 5 MPa, aufweisen (Bestimmung nach DIN EN 150 672 1-1).

Die Reaktionsmischung kann neben den Komponenten i), ii) und iii) zusätzlich auch Hilfs- und Zusatzstoffe enthalten. Beispiele für solche Hilfs- und Zusatzstoffe sind Vernetzer, Verdicker, Colösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel.

In einer weiteren bevorzugten Ausführungsform des Verfahrens wird in dem Schaumkörper eine Mehrzahl von internen Strukturen gebildet, deren Aufbau gleich oder voneinander verschieden ist. Beispielsweise kann eine Mehrzahl von Federn an bestimmten Bereichen einer Matratze oder eines Sitzkissens vorgesehen werden.

In einer weiteren bevorzugten Ausführungsform des Verfahrens wird eine Mehrzahl von Schritten III) parallel durchgeführt. Bei der Verfügbarkeit mehrerer Injektionsmittel wird auf diese Weise der Aufbau der angestrebten internen Struktur beschleunigt.

In einer weiteren bevorzugten Ausführungsform des Verfahrens weist die vorbestimmte Menge in Schritt III) ein Volumen von ≥ 10 µL bis ≤ 1000 mL auf. Bevorzugt ist dieses Volumen ≥ 50 µL bis ≤ 50 mL, mehr bevorzugt ≥ 100 µL bis ≤ 5 mL.

In einer weiteren bevorzugten Ausführungsform des Verfahrens ist in Schritt III) das Injektionsmittel eine Kanüle, das Ende der Kanüle wird zur Injektion der vorbestimmten Menge an den vorbestimmten Ort des Schaumkörpers bewegt und die Bewegung des Endes der Kanüle wird so durchgeführt, dass bereits im Schaumkörper vorliegendes erstes polymeres Material nicht von der Kanüle kontaktiert wird. So wird verhindert, dass die Kanüle die im Aufbau befindliche Struktur beschädigt.

In einer weiteren bevorzugten Ausführungsform des Verfahrens wird nach Bildung der internen Struktur ein Material abtragender Nachbearbeitungsschritt am die interne Struktur aufweisenden Schaumkörper durchgeführt. Dieses ist dann vorteilhaft, wenn die beabsichtigte Form des Schaumkörpers derart ist, dass wenig Volumen des Schaums zum Abstützen der im Aufbau befindlichen inneren Struktur zur Verfügung stehen würde. In diesem Fall würde zunächst ein ausreichend dimensionierter Schaumkörper im erfindungsgemäßen Verfahren eingesetzt und dann die Endform durch den Nachbearbeitungsschritt erhalten werden.

Artikel, die durch das erfindungsgemäße Verfahren in vorteilhafter Weise hergestellt werden können, sind beispielsweise Schuheinlagen, Schuhsohlen, Protektoren, Rucksäcke, Polsterungen, Babymatten, Orthopädische Sitzkissen, Verbindungselemente, Bürostuhlsitzflächen, Transportschutz-Artikel, Einlagen für Behälter, Kosmetik-Schwämme, nackenstützende Kissen, Matratzen, Kopfkissen, Reinigungsschwämme, robotische Greifer, Schallabsorber, schallgedämmte Treppenstufen, Halskrausen, Schienen/Gips-Systeme, Auflagepolster für, Trainingsgeräte, Sportmatten, Gerätegriffe, Fahrradsitze, Autositze und/oder Sitzmöbel. Details sind in der nachfolgenden Tabelle aufgeführt, ohne darauf beschränkt zu sein:

| **Produkt** | **Beispiele/Bemerkungen** |
|---|---|
| **Schuheinlagen** | **Orthopädische Schuheinlagen** |
| | Die Fußfehlstellung kann durch individuell anpassbare Aushärtung der Weichschaumeinlage korrigiert werden. |
| | **Muskelstimulierende Strukturen** |
| | Eine im Schaum integrierte Stützstruktur verbessert Haltung und Bewegung, entkrampft die Muskulatur in Fußsohle und Wadenmuskel und verbesserte Stabilität und Gleichgewichtsgefühl des Trägers. |
| | **Sportler-Schuheinlagen** |
| | Eine, das natürliche Abrollen des Fußes fördernde Schuheinlage, mit variablen Härtegraden zur Be- und Entlastung und Dämmung der unterschiedlichen Fußregionen. |
| | **Diabetesadaptive Einlagen** |
| | Eine gleichmäßige Verteilung des Körpergewichts, Vermeidung von Druckspitzen und eine auf die individuelle krankheitsbedingte Fußsituation abgestimmte Druckentlastung. |
| | **Gipsschuh-Schaumeinlagen** |
| | Die Schaumeinlage des Gipsschuhs wird partielle ausgehärtet, um Bereiche des Fußes zu fixieren und in seiner Bewegung einzuschränken. Sorgt für ein physiologisch korrektes Gangbild. |
| **Schuhsohlen** | **Flip-Flops** |
| | An den 3D-Scan des Fußes angepasste Fußbett, z.B. in Form von Längsgewölbestützen oder Fersentieflegung. |
| | **Sportschuhe** |
| | Unterschiedliche Härtegerade und kinetische Strukturen in der Schuhsohle für die jeweilige sportliche Belastung wirken auf das Gangbild ein. |
| | **Federnde Strukturen in Laufschuhen** |
| | Integrierte Sprungfeder-Strukturen unterstützen und federn die Schrittbewegung des Trägers, vorzugsweise verwendet für Laufschuhe. |
| **Protektoren** | **Kinetische Protektoren** |
| | Der jeweilige Körperteil wird durch eine dämmende Schaumschicht vor Schlägen oder Stößen geschützt. Die Bewegung des zu schützenden Körperteils wird darüber hinaus durch eine spezielle kinetische Struktur im Schaum noch gefördert und unterstützt. Die Muskulatur wird ebenfalls gestützt. |
| | **Skelett-Panzerung** |
| | Die schützende Schaumstruktur wird durch ein zusätzliches, integriertes Skelett noch weiter verstärkt. |
| **Rucksack- Polsterungen** | **Druckverteilung und Stabilisierung** |
| | Eine im Schaum injizierte Stützstruktur verteilt den Druck, der aus dem Gewicht des Rucksackes und dessen Schwingungen resultiert, gleichmäßig auf dem Schulterbereich und sorgt so für zusätzlichen Halt und Stabilität. |
| | **Sich anschmiegende Armschlaufen** |
| | Eine flexible Fin-Ray Struktur, die sich beim Anlegen des Rucksackes um die Schulterpartie legt, um einen höheren Halt zu gewehrleisten. |
| **Babymatten** | **Kopfstützende und Liegeposition sichernde Liegematte** |
| | Der Kopf des Babys wird durch eine stützende Struktur im viskoelastischen Schaum der Liegematte gestützt. Durch weitere Schaumelemente wird das Baby an der Taille in seiner Schlafposition gestützt. |
| | **Stillkissen** |
| | Eine stützende Struktur stabilisiert das liegende Baby während es gestillt wird. |
| **Orthopädische Sitzkissen** | **Steißbein-Kissen** |
| | Eine, das Steißbein entlastende und die Aufrichtung der Wirbelsäule fördernde Struktur wird in eine beliebige Schaumkissenform gedruckt, die womöglich weniger an die klassische Sitzkissenform erinnert. |
| **Verbindungselemente** | **Ankerpunkte für externe Elemente** |
| | Bestimmte Stellen können für die Montage von Schrauben o.Ä. verhärtet werden und Halt geben. |
| | **Modulares Stecksystem** |
| | Schnapphaken und Ösen können im Schaumblock integriert werden und müssen vor Ort nur noch miteinander verbunden werden. |
| | **Steckadapter für externe Systeme** |
| | In den Schaum können Adapter für andere Systeme (Gewinde, Schnapphaken, Bolzen) gedruckt werden. Form, Größe und Abstand können an die jeweilige Situation angepasst werden. |
| **Bürostuhlsitzfläche** | **Gymnastikball- Struktur** |
| | Durch eine integrierte kinetische Struktur aus einem flexiblen Material, ist man immer wieder gezwungen sich auszubalancieren. Das Prinzip ist angelehnt an das Sitzen auf einem Gymnastikball, welches besondere Muskulatur stimulierend ist. |
| | **Bewegungssitz-Struktur** |
| | Eine, den Körper zu einer Minimalaktivität zwingende Struktur in der Schaumsitzfläche sorgt für ein stetiges Ausbalancieren des Körpers und fördert die Aufrichtung der Wirbelsäule. |
| **Transportschutz- Artikel, Einlagen für Behälter** | **Angepasste Schutzwände im Werkzeugkoffer** |
| | Die aus Weichschaum bestehende Schaumoberfläche wird durch eine verhärtende Struktur in ihrer Schutzfunktion verstärkt, während an den Stellen, wo ein Objekt abgelegt werden soll, kein Material injiziert wurde. Es entstehen so also Aussparungen, in die das Objekt gelegt werden kann und es erhält dadurch eine schützende, sich im Schaum befindende, Außenwand. |
| **Kosmetik-Schwämme** | **Blendschwamm mit zusätzlichen Grip** |
| | Durch eine eingedruckte Struktur lässt sich der Blendschwamm besser in der Hand halten und führen. |
| | **Reinigungswerkzeuge für Make-Up-Pinsel** |
| | Durch eine integrierte, geriffelte Oberfläche können die Make-Up Pinsel und Utensilien bestens gereinigt werden. |
| **Nackenstützende Kissen** | **Badewannen-Nackenkissen** |
| | Ein durch eine versteifte Rückseite an der Kante einer Badewanne befestigtes Nackenkissen, das durch seine integrierte Struktur den Nacken beim Liegen auf dem Weichschaum trägt. |
| | **Nackenhörnchen** |
| | Eine integrierte Struktur sorgt für eine optimale Stützung des Kopfes und entlastet die Nackenmuskulatur. |
| **Matratzen** | **Matratze mit integriertem Lattenrost** |
| | Eine in die Matratze Injizierte Struktur übernimmt die Funktion des Lattenrosts. Das führt dazu, dass der Kunde nur noch ein optimal aufeinander abgestimmtes Element hat. |
| | **Matratze mit individualisierter Härteverteilung** |
| | Matratzen können mit unterschiedlichen Härtebereichen individuell auf den Benutzer angepasst werden und auf diese Weise die Erholung während des Liegens optimieren. |
| | **Matratze mit intelligenten Schutzmechanismen** |
| | Eine kinetisch wirksame Struktur verhindert, dass Personen während des Schlafens aus dem Bett fallen können. Dazu signalisiert die Struktur durch ein aufstellen der Ränder dem Schlafenden, dass er sich der Bettkante nährt, und ermöglicht diesem so einen ruhigen und unterbrechungsfreien Schlaf. |
| | **Oberflächenhaptik** |
| | Spezielle Strukturen, die nahe der Schaumoberfläche injiziert werden, lösen angenehme und wohltuende Wahrnehmungserlebnisse aus und bieten auf diese Weise dem Benutzer ein entspannendes Ausruhen. |
| **Kopfkissen** | **Individualisierte Härteverteilung** |
| | Kopfkissen können auf die Benutzer mit härteren und weicheren Arealen angepasst werden. Unterschiedliche Bauteile müssen nicht mehr montiert werden. IFP kann zudem feiner aufgelöst verhärten. |
| | **Integrierte Stütz-und Entlastungsfunktionen** |
| | Im Kopfkissen kann sich eine bestimmte Struktur befinden, die das Abrollen vom Kopf während des Schlafens verhindert. Dies ist vor Allem bei Verletzungen im Nacken von Vorteil um auf diese Weise die Nackenmuskulatur zu entspannen. |
| **Reinigungsschwämme** | **Reinigungsschwamm mit integrierten Druckperlen** |
| | Die in den Schwamm injizierte Struktur ermöglicht dem Benutzer eine verbesserte Reinigungswirkung. Durch das Aufdrücken des Schwamms auf ein Objekt sorgen die hervortretenden Druckpunkte dafür, dass sich der Schmutz besser lösen lässt. |
| | **Reinigungsschwamm mit integrierten Borsten** |
| | Wischen oder Bürsten, je nach Druck auf den Schwamm fahren kleine Borsten aus. |
| | **Ecken-Schwamm** |
| | Durch eine integrierte keilförmige Struktur können rechtwinklige Ecken und orthogonale Zwischenflächen optimal gereinigt werden. |
| | **Click-In Mopp** |
| | Der Putzschwamm ist mit integrierten Click-In Elementen versehen, so dass er automatische am Ende des Wischmopps arretiert werden kann. |
| | **Schuhcreme-Schwamm** |
| | Durch eine sanften Widerstand leistende integrierte Struktur wird das Verteilen der Schuhcreme auf der Schuhoberfläche unterstützt. Besonders bei Wildlederschuhen kann so eine Kombination aus Schwamm und Bürste zum Einsatz kommen. |
| **Robotische Greifer** | **Integrierte Greifer-Struktur** |
| | Eine in den Schaum gedruckte Struktur sorgt dafür, dass der Schaum eine greifende Bewegung bei Aktivierung der Struktur ausübt. Dadurch lassen sich besonders sensible und feine Objekte mit einem robotischen System greifen und bewegen. |
| **Schallabsorber** | **Schallabsorption durch variierende Schaumstruktur** |
| | Eingedruckte Strukturen führen dazu, dass der Schall mehrfach gebrochen und dadurch Absorbiert wird. Computergestützte Injektionsverfahren ermöglichen dafür ein optimiertes und an die jeweilige Situation angepasstes Absorptionsverhalten. |
| | **Selbsttragende Schallabsorber-Wände** |
| | Selbsttragende Schallabsorber aus Schaum die zum einen akustisch wirksam sind und zum anderen als Raumteiler / Wände funktionieren. |
| **Schallgedämmte Treppenstufen** | **Selbsttragende Schaumtreppenstufen** |
| | Tragstruktur in Schaum integriert für leise und weiche Treppenstufen die keinen Körperschall an die Auflager abgeben. |
| | **Lastenverteilende Struktur für Schaumtreppenstufen** |
| | Durch eine Spezielle Struktur wird bei einer punktuellen Belastung die Last auf den gesamten Schaum verteilt umso mehr Halt und ein "Wegkippen" bei Benutzung zu vermeiden. |
| **Halskrausen** | **Integrierte und individualisierte Verstärkung** |
| | An den Patienten angepasste Verstärkung von Schaum der um den Hals gelegt wird. Durch die Struktur im Schaum kann mehr Tragekomfort und eine bessere Stabilisierung der Nackenposition geboten werden. |
| **Schienen / Gips** | **Integrierte und individualisierte Verstärkung** |
| | An den Patienten angepasste Verstärkung von Schaum der um die betroffene Stelle gebunden wird. Durch den Schaum kann mehr Tragekomfort und eine bessere Stabilisierung geboten werden. |
| **Auflagerpolster für Trainingsgeräte** | **Integrierte Zwangsführung für Fitnessgeräte** |
| | Optimierte Bewegungsführung für Fitnessübungen durch injizierte Strukturen. Diese geben der Person Halt und verhindern das Verletzungen durch nicht korrekt ausgeführte Bewegungsabläufe auftreten. |
| **Sportmatten** | **Lastenverteilende Struktur für Sportmatten** |
| | Durch eine Spezielle Struktur wird bei einer punktuellen Belastung die Last auf den gesamten Schaum verteilt umso mehr Halt und ein "Wegkippen" bei Benutzung zu vermeiden. |
| **Gerätegriffe** | **Individualisierte Gerätegriffe** |
| | Eine in den Griff eingedruckte Struktur die an die Ergonomie des Benutzers angepasst ist ermöglicht optimalen Halt und Bedienung des jeweiligen Gerätes. |
| **Fahrradsitze** | **Adaptiver Fahrradsitz** |
| | Eine in den Fahrradsattel gedruckte Struktur passt sich an die jeweilige Haltung des Radfahrers an und ermöglicht diesem so einen optimierten Halt, Komfort sowie maximale Kraftübertragung zu jedem Zeitpunkt. |
| | **Angepasster Fahrradsitz** |
| | Durch einen 3D-Scan des Fahrradfahrers wird ein Sattel gefertigt, der aufgrund der integrierten Struktur auf seine Anatomie und ergonomischen Bedürfnisse angepasst werden kann. |
| **Autositze** | **Kurven- und beschleunigungsadaptive Autositze** |
| | Eine in den Sitz integrierte Struktur gibt dem Fahrer bei Auftreten von g-Kräften verstärkten Halt und sorgt so für mehr Sicherheit im Straßenverkehr. |
| | **Integrierte Ein- und Ausstiegshilfe für Autositze** |
| | Eine in den Sitz integrierte Struktur unterstütze durch eine wegdrehende Bewegung des Fahrersitzes diesen beim Ein- und Aussteigen. |
| | **Autositz mit integriertem Gestell** |
| | Eine in den Weichschaum eingedruckte Struktur übernimmt die Funktion eines Gestells und ermöglicht so eine leichtere und günstigere Herstellung von Autositzen. |
| **Sitzmöbel** | **Schaum-Sessel** |
| | In einer Weichschaumform befindet sich eine Kugelwolkenstruktur, die sich zu einer Sitzschale und Rückenlehne ausformt, sobald eine Person auf der Schaumform Platz nimmt. |
| | **Integrierte Sitzmöbel-Beine** |
| | Eine vom Inneren des Schaums hinausragende Struktur fungiert als Beinelement eines Möbelstücks. |

Der eine interne Struktur aufweisende Schaumkörper, erhältlich durch ein erfindungsgemäßes Verfahren, wobei die interne Struktur ein erstes polymeres Material umfasst und der Schaumkörper ein zweites polymeres Material umfasst und das Material der internen Struktur von dem Material des Schaumkörpers verschieden ist, zeichnet sich zunächst dadurch aus, dass sämtliche Oberflächen der internen Struktur den Schaumkörper kontaktieren. Hierunter ist insbesondere zu verstehen, dass keine Hohlräume zwischen Struktur und Schaumkörper vorliegen, wobei im Schaum selbst vorliegende Hohlräume selbstverständlich ausgenommen sind. Vorzugsweise ist der Kontakt ein stoffschlüssiger Kontakt, so dass mechanische Kräfte besser zwischen Schaumkörper und Struktur übertragen werden können.

Es ist weiterhin vorgesehen, dass die interne Struktur eine Feder mit einer Belastungsrichtung ist. Die Belastungsrichtung der Feder ist diejenige Richtung, die dem Entwurf der Feder zugrunde lag. Bei Belastung des Schaumkörpers an einem Ort, an dem die interne Struktur vorliegt und bei Belastung entlang der Belastungsrichtung der internen Struktur ist ermittelte Stauchhärte (40% Stauchung, DIN EN ISO 3386-1:2010-09) ≥ 10% bis ≤ 100% höher ist als die Stauchhärte (40% Stauchung, DIN EN ISO 3386-1:2010-09) des Schaumkörpers an einem Ort, an dem keine interne Struktur vorliegt. Unter Feder kann gemäß der Anmeldung jede Struktur verstanden werden, die es ermöglicht die beschriebene Änderung der Stauchhärte zu bewirken.

Die in den Schaumkörper integrierte Feder bewirkt somit eine lokale Erhöhung der Stauchhärte im Vergleich zu Regionen des Schaumkörpers, in denen keine Feder integriert ist und somit nur der Schaum des Schaumkörpers die Stauchhärte bestimmt. Vorzugsweise ist die Stauchhärte ≥ 20% bis ≤ 80% höher, mehr bevorzugt ≥ 30% bis ≤ 70%.

Das Vorliegen der internen Struktur im Schaumkörper kann hinsichtlich der lokalen Stauchhärte synergistisch wirken, wenn die Deformation des Schaums durch die interne Struktur und die Deformation der Struktur durch den Schaum beeinflusst wird.

In einer bevorzugten Ausführungsform des eine interne Struktur aufweisenden Schaumkörpers ist das erste polymere Material ein Polyurethanpolymer. Zur Vermeidung von Wiederholungen wird auf die Ausführungen zum Polyurethanpolymer für das erste polymere Material im Zusammenhang mit dem erfindungsgemäßen Verfahren verwiesen.

In einer weiteren bevorzugten Ausführungsform des eine interne Struktur aufweisenden Schaumkörpers ist das zweite polymere Material ein Polyurethanpolymer. Zur Vermeidung von Wiederholungen wird auf die Ausführungen zum Polyurethanpolymer für das zweite polymere Material im Zusammenhang mit dem erfindungsgemäßen Verfahren verwiesen.

In einer weiteren bevorzugten Ausführungsform des eine interne Struktur aufweisenden Schaumkörpers ist die Struktur eine Blattfeder, Spiralfeder, Elliptikfeder, Parabelfeder, Wellenfeder, Schenkelfeder, Stabfeder, Schraubenfeder oder Tellerfeder.

In einer weiteren bevorzugten Ausführungsform des eine interne Struktur aufweisenden Schaumkörpers ist die interne Struktur eine Mehrzahl von nicht miteinander verbundenen kugelförmigen, elliptischen oder stabförmigen Volumina oder eine Mehrzahl von miteinander verbundenen kugelförmigen, elliptischen oder stabförmigen Volumina. Der Begriff "kugelförmig" schließt Abweichungen von der idealen Kugelform mit ein, bei denen der kleinste Abstand und der größte Abstand der Oberfläche des Volumens zum geometrischen Mittelpunkt des Volumens nicht mehr als 20%, bevorzugt nicht mehr als 10%, voneinander abweichen.

Stabförmige Volumina können derart miteinander verbunden sein, dass zwei Volumina an ihren Enden aufeinander treffen und so ein "V"-förmiges Gebilde bilden. Der Winkel zwischen den Schenkeln des "V"-förmigen Gebildes kann 5° bis 85°, vorzugsweise 15° bis 60°, betragen. Es können auch mehr als zwei, beispielsweise drei oder vier, stabförmige Volumina an einem gemeinsamen Punkt aufeinander treffen. Die gebildete Figur kann so beschrieben werden, dass die stabförmigen Volumina wenigstens einen Teil der Kanten einer gedachten Pyramide bilden.

Stabförmige Volumina können auch derart miteinander verbunden sein, dass eine Mehrzahl der Volumina ein Netzwerk mit Knotenpunkten bildet. Vorzugsweise sind die Knotenpunkte in zumindest einem Teil des Volumens des Körpers periodisch wiederkehrend verteilt. Wenn die Knotenpunkte in einem Volumen periodisch wiederkehrend verteilt sind, lässt sich dieser Umstand mit den Mitteln der Kristallographie beschreiben. Die Knotenpunkte können entsprechend den 14 Bravais-Gittern angeordnet sein: kubisch-primitiv (sc, simple cubic), kubisch-raumzentriert (bcc, body centered cubic), kubisch-flächenzentriert (fcc, face centered cubic), tetragonal-primitiv, tetragonal-raumzentriert, orthorhombisch-primitiv, orthorhombisch-basiszentriert, orthorhombischraumzentriert, orthorhombisch-flächenzentriert, hexagonal-primitiv, rhomboedrisch, monoklinprimitiv, monoklin-basiszentriert und triklin. Bevorzugt sind die kubischen Gitter sc, fcc und bcc.

In der kristallographischen Betrachtungsweise bleibend kann die Anzahl der stabförmigen Volumina, über die ein Knotenpunkt mit anderen Knotenpunkten verbunden ist, als die Koordinationszahl des Knotenpunkts angesehen werden. Die durchschnittliche Anzahl der stabförmigen Volumina, die von den Knotenpunkten ausgehen, kann ≥ 4 bis ≤ 12 betragen, wobei auch in der Kristallographie nicht übliche oder nicht mögliche Koordinationszahlen realisiert werden können.

Die vorliegende Erfindung wird anhand der nachfolgenden Figuren unter Bezugnahme auf bestimmte Ausführungsformen näher erläutert, ohne jedoch darauf beschränkt zu sein.

Es zeigen:
- FIG. 1: eine in dem Schaumkörper zu bildende interne Struktur
- FIG. 2: einen Schritt im erfindungsgemäßen Verfahren
- FIG. 3: einen weiteren Schritt im erfindungsgemäßen Verfahren
- FIG. 4: einen weiteren Schritt im erfindungsgemäßen Verfahren
- FIG. 5-23b: erfindungsgemäße Schaumkörper

Schritt (I) des erfindungsgemäßen Verfahrens beinhaltet die Auswahl einer in dem Schaumkörper zu bildenden internen Struktur. Diese Auswahl erfolgt zweckmäßigerweise in einem CAD-Programm, welches ein dreidimensionales Modell der Struktur bereitstellt und in diesem dreidimensionalen Modell die Struktur in einzelne Volumenelemente unterteilt.

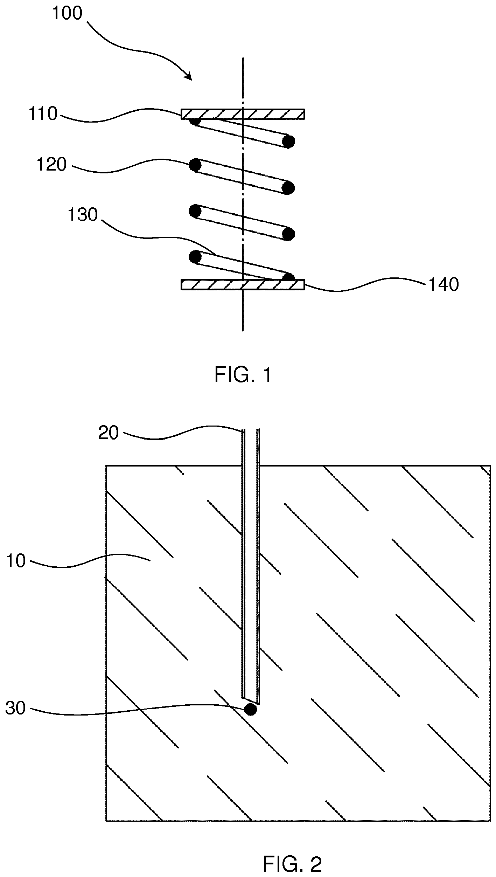

Ein Beispiel für eine solche Struktur, welche in dem Schaumkörper gebildet werden soll, ist in FIG. 1 wiedergegeben. Hierbei handelt es sich um eine Schraubenfeder 100, welche in Querschnittsansicht wiedergegeben ist. Die Schraubenfeder 100 weist ferner eine Kopfplatte 110 und eine Basisplatte 140 auf. Querschnitte 120 und hinter der Schnittebene liegende Segmente 130 der Feder definieren die Schraubenfeder 100.

Solche Schraubenfedern 100 können beispielsweise in Matratzen oder Kissen vorgesehen sein, so dass lokal Bereiche mit einer erhöhten Stauchhärte gebildet werden. Die Kopfplatte 110 und die Bodenplatte 140 dienen dabei im Zusammenhang mit Platzierung in einer Matratze oder einem Kissen der besseren Einleitung von Kompressionskräften in die Feder 100.

FIG. 2 zeigt schematisch Schritt III) im erfindungsgemäßen Verfahren. In den Schaumkörper 10 wird mittels eines als Kanüle 20 ausgeführten Injektionsmittels eine vorbestimmte Menge an Material 30 in den Schaumkörper 10 injiziert. Im Fall eines thermoplastischen Polymers wird eine Schmelze des Polymers injiziert. Es ist aber auch möglich, Mehrkomponentensysteme einzusetzen, in denen eine Reaktionsmischung zu dem gewünschten polymeren Material reagiert. Die Reaktionsmischung kann fertig gemischt durch die Kanüle 20 injiziert werden oder aber, durch die Verwendung beispielsweise einer Kanüle mit mehreren Leitungen, erst im Schaumkörper 10 gemischt werden.

In einer besonderen Ausführungsform kann das reaktive Material auch über zwei unabhängige Injektionsmittel wie beispielsweise Kanülen getrennt injiziert (auch geometrisch aus verschiedenen Raumrichtungen kommend) und dann im Zielpunkt vereinigt werden. Es ist aber auch möglich, dass ein einzelnes Injektionsmittel eingerichtet ist, um verschiedene Ströme der Komponenten eines reaktiven Materials im Zielpunkt zu vereinigen.

Die injizierte Menge an Material 30 wird durch den umgebenden Schaum des Schaumkörpers 10 gestützt und kann somit an dem ihm zugedachten Ort verbleiben. Die injizierte Menge an Material 30 entspricht, auch mit ihrer Lage im Schaumkörper 10, einem Volumenelement der zu bildenden internen Struktur.

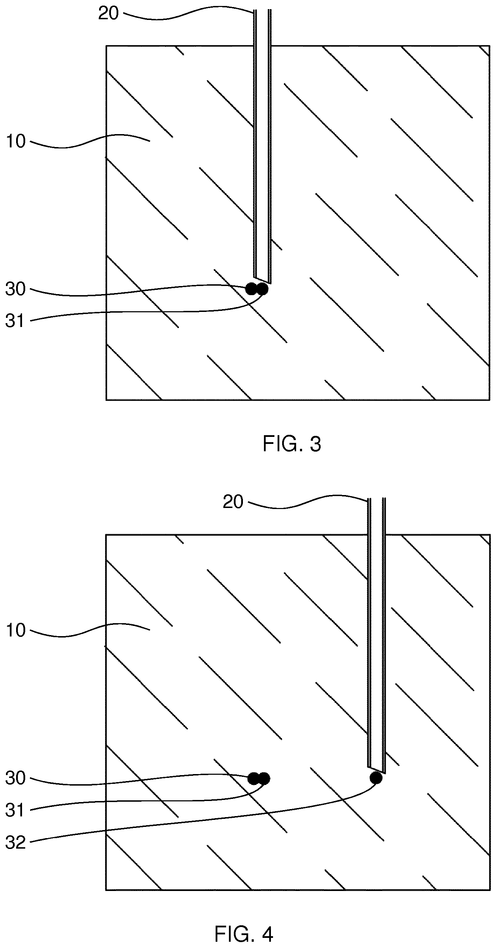

Weitere Durchführungen des Schritts III) sind in FIG. 3 und 4 gezeigt. Die Situation gemäß FIG. 3 schließt sich an die Situation gemäß FIG. 2 an. Nach der Injektion des Materials 30 in FIG. 2 wurde die Kanüle 20 aus dem Schaumkörper 10 entfernt und an einer anderen Stelle wieder eingestochen. Anschließend wird weiteres Material 31 an einen weiteren vorbestimmten Ort, der hier neben dem zuvor injizierten Material 30 liegt, injiziert.

Die in FIG. 4 gezeigte Situation schließt an die in FIG. 3 gezeigte an. Nach der Injektion des Materials 31 wurde die Kanüle 20 aus dem Schaumkörper 10 entfernt. Anschließend wird die Kanüle 20 an einen neuen Ort eingestochen und es wird Material 32 injiziert.

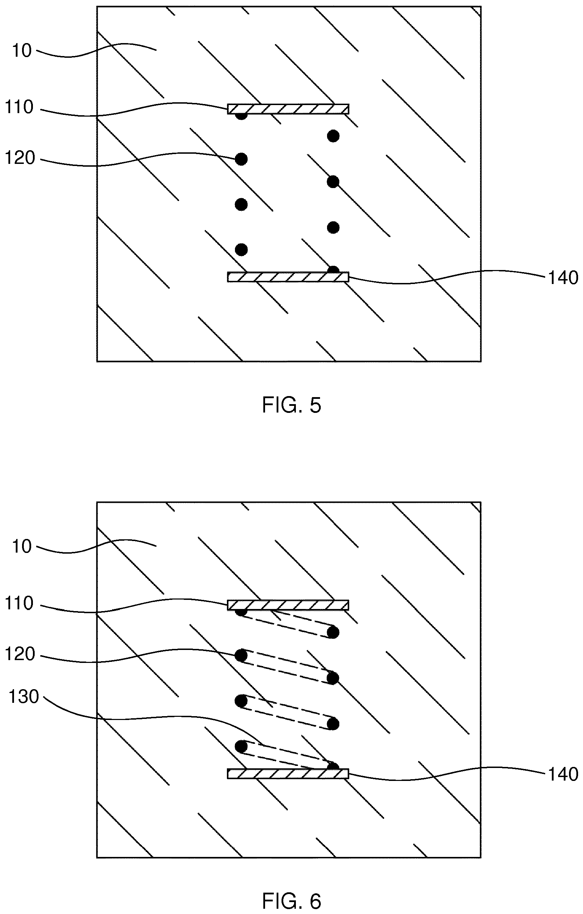

FIG. 5 zeigt einen Schaumkörper mit einer internen Struktur als Endergebnis des erfindungsgemäßen Verfahrens in Querschnittsansicht. Die in FIG. 1 gezeigte Feder 100 mit Kopfplatte 110 und Basisplatte 140, die als interne Struktur ausgewählt wurde, ist im Schaumkörper 10 eingebettet. Der Schaum des Schaumkörpers 10 durchdringt hierbei die Feder, das heißt, dass das durch die Windungen der Feder, deren Querschnittsflächen mit dem Bezugszeichen 120 versehen sind, gebildete Volumen keinen Hohlraum darstellt, sondern durch Schaum ausgefüllt ist. Dieses ist durch das erfindungsgemäße Verfahren leicht zu realisieren, da die interne Struktur in bereits bestehendem Schaum aufgebaut wird.

Zum besseren Verständnis zeigt FIG. 6 die gleiche Querschnittsansicht wie FIG. 5, jedoch sind dort die im Schaum befindlichen, hinter der Schnittebene liegende Segmente 130 der Feder gestrichelt dargestellt.

In einer bevorzugten Ausführungsform des Verfahrens verbinden sich in zwei aufeinanderfolgenden Schritten III) die injizierten Schmelzen oder die injizierten Reaktionsmischungen zumindest teilweise zu einem gemeinsamen Volumenelement miteinander. Dieses ist in FIG. 3 gezeigt. Das eingebrachte Material 30 und 31 kombiniert zu einem gemeinsamen Volumen, so dass auch einstückige Strukturen oder Strukturabschnitte aufgebaut werden können. Im Fall der Injektion einer Polymerschmelze lässt sich der Umstand nutzen, dass der Schaumkörper 10 als thermische Isolierung wirkt. Dann wird das Koaleszieren der in den einzelnen Injektionsschritten injizierten Polymerschmelze erleichtert.

Unter Bezugnahme auf FIG. 1, 5 und 6 soll ein erfindungsgemäßer Schaumkörper weiter erläutert werden. Der eine interne Struktur 100 aufweisende Schaumkörper 10, erhältlich durch ein erfindungsgemäßes Verfahren, wobei die interne Struktur 100 ein erstes polymeres Material umfasst und der Schaumkörper 10 ein zweites polymeres Material umfasst und das Material der internen Struktur 100 von dem Material des Schaumkörpers 10 verschieden ist, zeichnet sich zunächst dadurch aus, dass sämtliche Oberflächen der internen Struktur 100 den Schaumkörper 10 kontaktieren. Hierunter ist insbesondere zu verstehen, dass keine Hohlräume zwischen Struktur 100 und Schaumkörper 10 vorliegen, wobei im Schaum selbst vorliegende Hohlräume selbstverständlich ausgenommen sind. Vorzugsweise ist der Kontakt ein stoffschlüssiger Kontakt, so dass mechanische Kräfte besser zwischen Schaumkörper 10 und Struktur 100 übertragen werden können.

Es ist weiterhin vorgesehen, dass die interne Struktur 100 eine Feder mit einer Belastungsrichtung ist. Die Belastungsrichtung der Feder ist diejenige Richtung, die dem Entwurf der Feder zugrunde lag. So wird die in FIG. 1 dargestellte Feder entlang der strichpunktierten Linie auf Zug oder auf Druck belastet. Bei Belastung des Schaumkörpers 10 an einem Ort, an dem die interne Struktur 100 vorliegt und bei Belastung entlang der Belastungsrichtung der internen Struktur ist ermittelte Stauchhärte (40% Stauchung, DIN EN ISO 3386-1:2010-09) ≥ 10% bis ≤ 10000% höher ist als die Stauchhärte (40% Stauchung, DIN EN ISO 3386-1:2010-09) des Schaumkörpers 10 an einem Ort, an dem keine interne Struktur 100 vorliegt.

Die in den Schaumkörper 10 integrierte Feder bewirkt somit eine lokale Erhöhung der Stauchhärte im Vergleich zu Regionen des Schaumkörpers, in denen keine Feder integriert ist und somit nur der Schaum des Schaumkörpers die Stauchhärte bestimmt. Vorzugsweise ist die Stauchhärte ≥ 20% bis ≤ 80% höher, mehr bevorzugt ≥ 30% bis ≤ 70%.

Das Vorliegen der internen Struktur 100 im Schaumkörper 10 kann hinsichtlich der lokalen Stauchhärte synergistisch wirken, wenn die Deformation des Schaums durch die interne Struktur 100 und die Deformation der Struktur 100 durch den Schaum beeinflusst wird. Im einfachsten Fall, wie in FIG. 5 und 6 dargestellt, kann zwischen den Segmenten 130 der Feder vorliegender Schaum den Effekt haben, dass die Feder bereits bei einem geringeren Kompressionsweg ihre maximal mögliche Kompression erreicht.

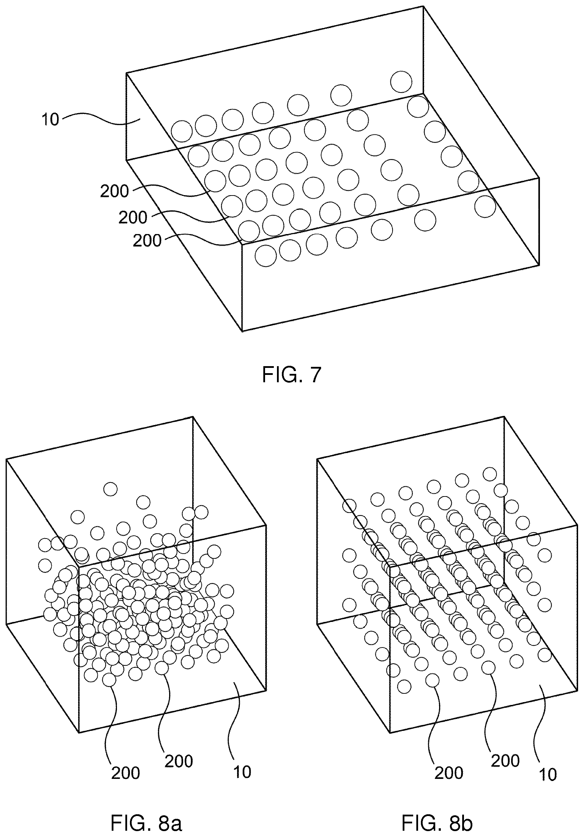

FIG. 7 bis FIG. 23b zeigen Beispiele für erfindungsgemäße Schaumkörper, in die interne Struktur eine Mehrzahl von nicht miteinander verbundenen kugelförmigen oder stabförmigen Volumina oder eine Mehrzahl von miteinander verbundenen kugelförmigen oder stabförmigen Volumina ist.

FIG. 7 zeigt einen Schaumkörper 10, der interne Strukturen in Form von nicht miteinander verbundenen kugelförmigen Volumina 200 aufweist. Das Material des Schaumkörpers 10 kann beispielsweise einen Polyurethanschaum umfassen und das Material der Volumina 200 beispielsweise ein duroplastisches oder elastomeres Polyurethan- oder Epoxyharz umfassen. In dem hier gezeigten Schaumkörper 10 vorliegende Volumina 200 sind in einer Ebene und knapp unterhalb der Oberfläche des Schaumkörpers 10 positioniert, so dass eine ästhetische oder funktionale Beeinflussung der Oberfläche erreicht werden kann.

FIG. 8a und 8b zeigen Schaumkörper 10, die interne Strukturen in Form von nicht miteinander verbundenen kugelförmigen Volumina 200 aufweisen. Das Material der Schaumkörper 10 kann beispielsweise einen Polyurethanschaum umfassen und das Material der Volumina 200 beispielsweise ein duroplastisches oder elastomeres Polyurethan- oder Epoxyharz umfassen. In den hier gezeigten Schaumkörpern 10 vorliegende Volumina 200 sind zufällig (FIG. 8a) oder in einem kubischen Gitter (FIG. 8b) im Volumen der Schaumkörper 10 positioniert. Eine Anwendung für derartige funktionalisierte Schaumkörper 10 liegt in akustischen Absorbtionselementen.

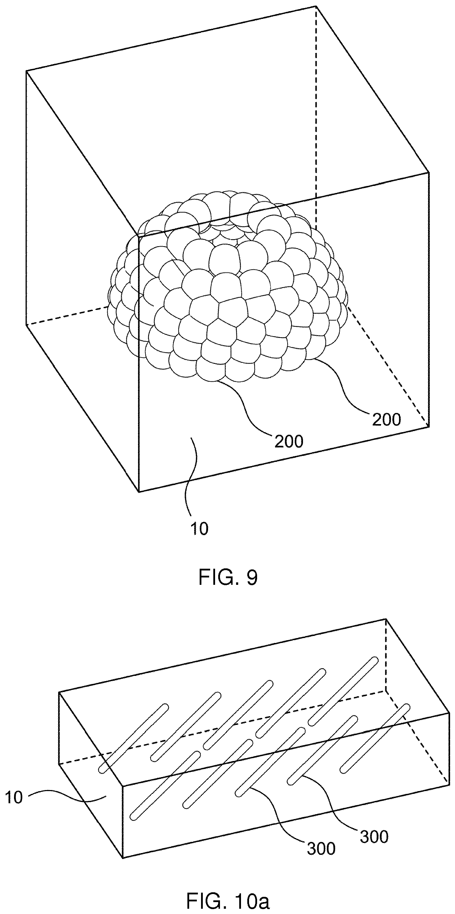

FIG. 9 zeigt einen Schaumkörper 10, der eine interne Struktur in Form von miteinander verbundenen nominell kugelförmigen Volumina 200 aufweist. Das Material des Schaumkörpers 10 kann beispielsweise einen Polyurethanschaum umfassen und das Material der Volumina 200 beispielsweise ein duroplastisches oder elastomeres Polyurethan- oder Epoxyharz umfassen. In dem hier gezeigten Schaumkörper 10 vorliegende Volumina 200 bilden einen Ausschnitt einer Kugelschale. Eine Anwendung für derartig funktionalisierte Schaumkörper 10 liegt in Sitzpolstern mit einer über Material und Form der verbundenen Volumina 200 einstellbaren Stauchhärte.

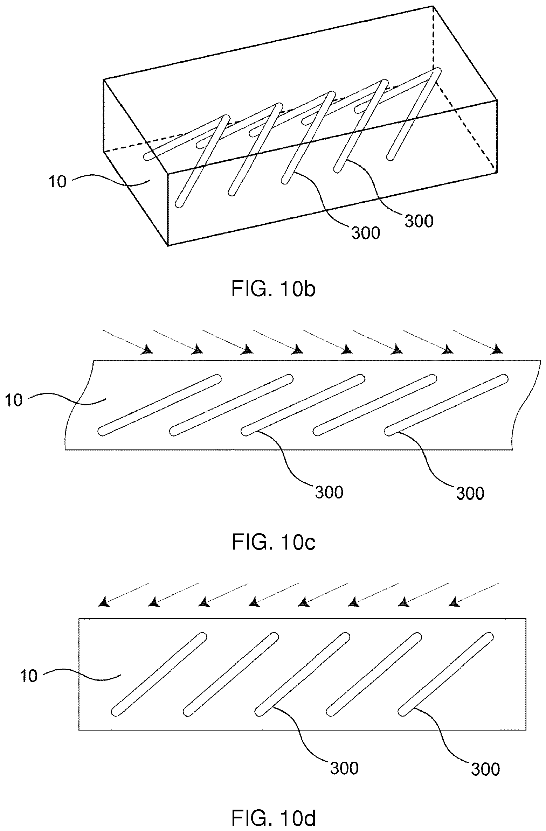

FIG. 10a und 10b zeigen Schaumkörper 10, die interne Strukturen in Form von linearen (FIG. 10a) oder V-förmig abgewinkelten (FIG. 10b) stabförmigen Volumina 300 aufweisen. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Die Volumina 300 verlaufen in ihrer Längsrichtung nicht parallel zu einer Seitenfläche des Schaumkörpers 10, sondern gewinkelt. Der Winkel kann beispielsweise 40° bis 50° betragen. Insbesondere verlaufen sie in ihrer Längsrichtung nicht senkrecht zu der Oberfläche, welche mit einer auf den Schaumkörpern 10 sitzenden Person in Kontakt steht oder stehen würde. Auf diese Weise kann ein unterschiedliches Deformationsverhalten bezüglich auf diese Oberfläche einwirkenden Scherkräften erreicht werden. Dieses ist in den Querschnittsansichten der FIG. 10c und FIG. 10d abgebildet. Die in FIG. 10c einwirkende Scherbelastung kann die Volumina 300 wegdrücken und so den Schaumkörper 10 auch komprimieren. Im Gegensatz dazu gelingt es in FIG. 10d der Scherbelastung nicht, so dass der Schaumkörper nicht oder weniger als in FIG. 10c gezeigt komprimiert wird. Eine Anwendung für derartig funktionalisierte Schaumkörper liegt in Sitzpolstern.

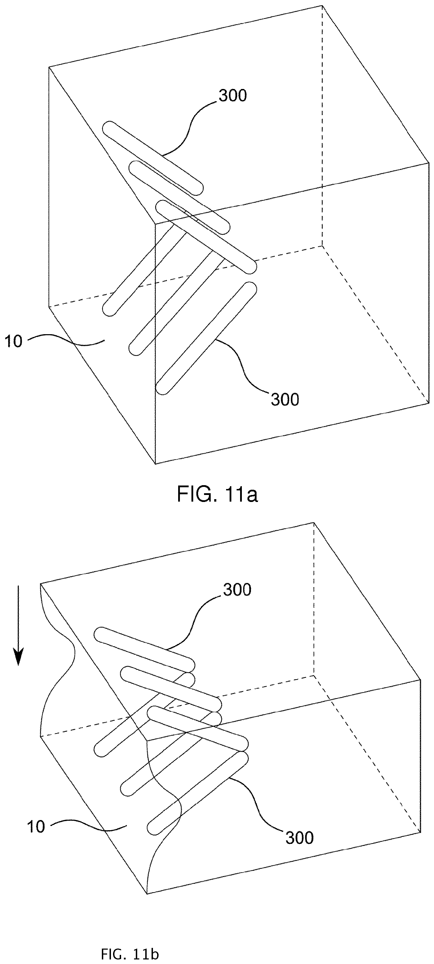

FIG. 11a und 11b zeigen Schaumkörper 10, die interne Strukturen in Form nicht miteinander verbundenen, aber paarweise V-förmig zueinander angeordneten stabförmigen Volumina 300 aufweisen. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Der Winkel in den V-förmig angeordneten Paaren kann beispielsweise 40° bis 50° betragen. Weiterhin weist die Öffnung der V-förmig angeordneten Paare in Richtung einer seitlichen Oberfläche des Schaumkörpers 10. Auf diese Weise kann ein gezieltes Deformationsverhalten des Schaumkörpers 10 erreicht werden, wie in FIG. 11b dargestellt ist. Bei Belastung, beispielsweise durch eine auf dem Schaumkörper 10 sitzende Person, wird der Schaumkörper 10 an dieser Seite so komprimiert, wie es der Anordnung der V-förmigen Paare entspricht. Der gleiche Effekt lässt sich auch erreichen, wenn die Volumina 300 als jeweils durchgehende, abgewinkelte Volumina vorliegen. Eine Anwendung für derartig funktionalisierte Schaumkörper liegt in Sitzpolstern.

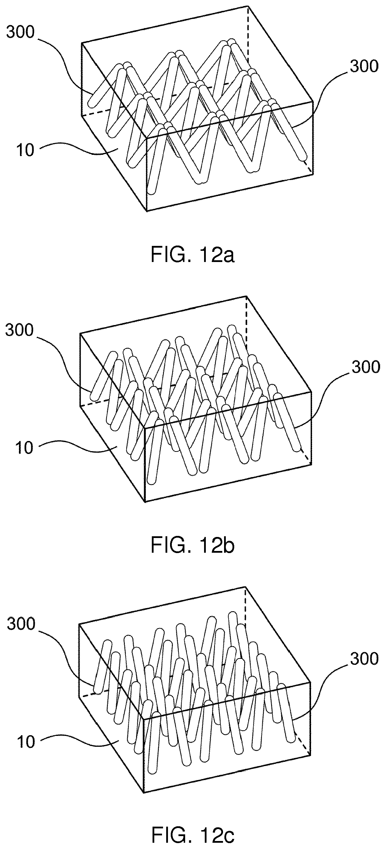

FIG. 12a bis FIG. 12c zeigen Schaumkörper 10, die interne Strukturen in Form nicht miteinander verbundener, aber jeweils die Kanten einer Pyramide oder eines Pyramidenstumpfs bildenden stabförmigen Volumina 300 aufweisen. Die Pyramiden oder Pyramidenstümpfe können beispielsweise eine dreieckige, viereckige oder fünfeckige Basis aufweisen. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Der Winkel zwischen benachbarten, V-förmig angeordneten Paaren der Volumina 300 kann beispielsweise 5° bis 85°, vorzugsweise 15° bis 60°, betragen. Weiterhin weist die Spitze der Pyramiden oder Pyramidenstümpfe in Richtung der Oberfläche, welche mit einer auf den Schaumkörpern 10 sitzenden Person in Kontakt steht oder stehen würde. Auf diese Weise kann ein gezieltes Deformationsverhalten des Schaumkörpers 10 erreicht werden: je größer der Winkel ist, desto leichter verformt sich der Schaumkörper 10 unter Belastung. Eine Anwendung für derartig funktionalisierte Schaumkörper liegt in Sitzpolstern.

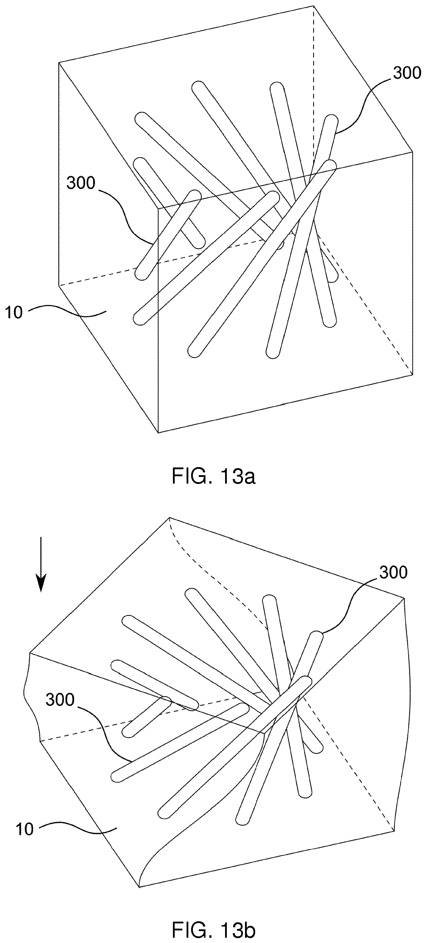

FIG. 13a und 13b zeigen Schaumkörper 10, die interne Strukturen in Form von stabförmigen Volumenelementen 300 aufweisen, welche auf der Mantelfläche eines gedachten Doppelkegelstumpfes angeordnet sind. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Der Neigungswinkel der Volumina 300 kann beispielsweise 15° bis 60° betragen. Weiterhin weist eine Basis der Doppelkegelstümpfe in Richtung der Oberfläche, welche mit einer auf den Schaumkörpern 10 sitzenden Person in Kontakt steht oder stehen würde. Auf diese Weise kann ein gezieltes Deformationsverhalten des Schaumkörpers 10 erreicht werden: durch eine Druckbelastung verdreht sich der Schaumkörper 10, wie in FIG. 13b dargestellt ist. Eine Anwendung für derartig funktionalisierte Schaumkörper liegt in Sitzpolstern.

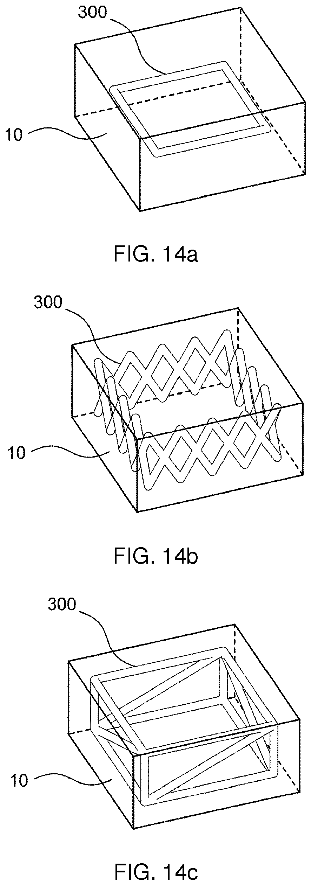

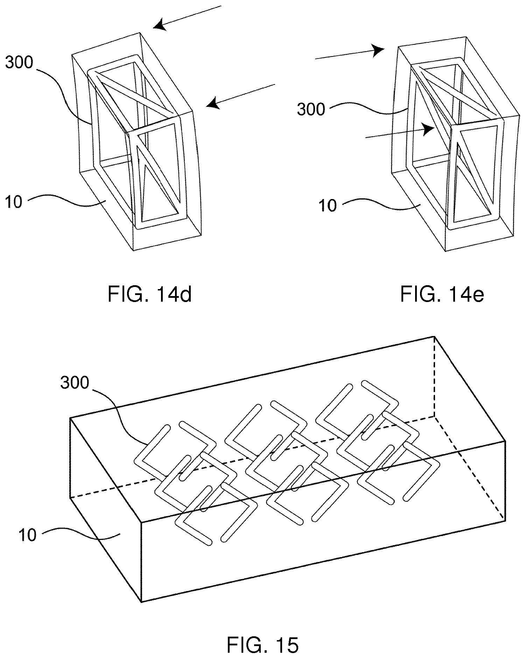

FIG. 14a bis FIG. 14c zeigen Schaumkörper 10, in denen interne Strukturen aus stabförmigen Volumenelementen 300 als Rahmen zur Verstärkung der Seiten der Schaumkörper 10 dienen. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. In der in FIG. 14a gezeigten Anordnung sind die stabförmigen Volumenelemente 300 zu einem rechteckigen Rahmen verbunden. Der Rahmen gemäß FIG. 14b ist aus stabförmigen Volumenelementen 300 aufgebaut, von denen sich jeweils vier an Verzweigungsstellen treffen. Eine Doppelung des Rahmens aus FIG. 14a ist in FIG. 14c abgebildet. Die Rahmen sind über diagonale Streben ebenfalls miteinander verbunden. Die Verstärkung des Schaumkörpers 10 aus FIG. 14c gegenüber einer Biegebelastung ist in FIG. 14d und FIG. 14e schematisch dargestellt. Eine Anwendung für derartig funktionalisierte Schaumkörper liegt in Sitzpolstern.

FIG. 15 zeigt einen Schaumkörper 10, der interne Strukturen in Form von V-förmig abgewinkelten stabförmigen Volumina 300 aufweist. Das Material des Schaumkörpers 10 kann beispielsweise einen Polyurethanschaum umfassen und das Material der Volumina 300 beispielsweise ein duroplastisches oder elastomeres Polyurethan- oder Epoxyharz umfassen. Der Winkel kann beispielsweise 40° bis 50° betragen. Die Winkelhalbierende verläuft parallel zu der Oberfläche, welche mit einer auf den Schaumkörpern 10 sitzenden Person in Kontakt steht oder stehen würde. Weiterhin verläuft die durch die V-förmig abgewinkelten stabförmigen Volumina 300 aufgespannte Ebene senkrecht zu der Oberfläche, welche mit einer auf den Schaumkörpern 10 sitzenden Person in Kontakt steht oder stehen würde. Eine Anwendung für derartig funktionalisierte Schaumkörper liegt in Sitzpolstern.

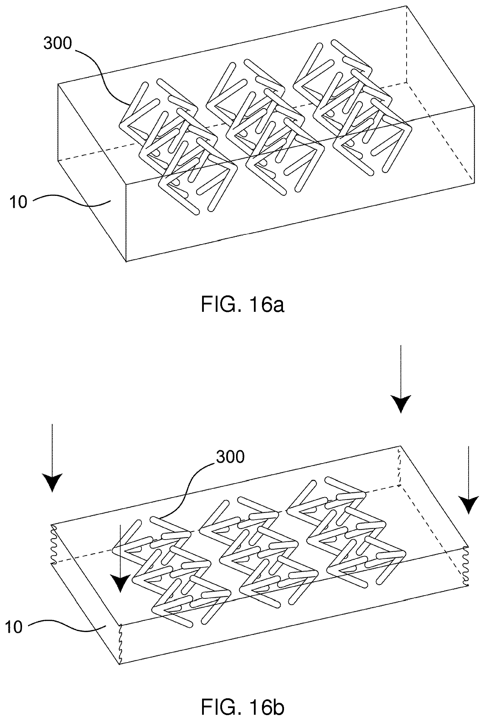

Die Ecke der V-förmig abgewinkelten Volumina kann auch als Knotenpunkt angesehen werden, wenn mehr als zwei stäbchenförmige Volumina von diesem ausgehen. Solch eine Anordnung ist in FIG. 16a (unbelasteter Zustand) und FIG. 16b (belasteter Zustand) dargestellt. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Der durch zwei benachbarte stabförmige Volumina 300 eingeschlossene Winkel kann beispielsweise 40° bis 50° betragen. Im Schaumkörper 10 kann die Steifheit des Körpers, beispielsweise beim Daraufsitzen, durch die Anzahl der von einem Knotenpunkt ausgehenden stabförmigen Volumina 300 eingestellt werden. Je mehr stabförmige Volumina sich an einem Knotenpunkt treffen, desto steifer wird der Körper in Belastungsrichtung ausfallen. Eine Anwendung für derartig funktionalisierte Schaumkörper liegt in Sitzpolstern.

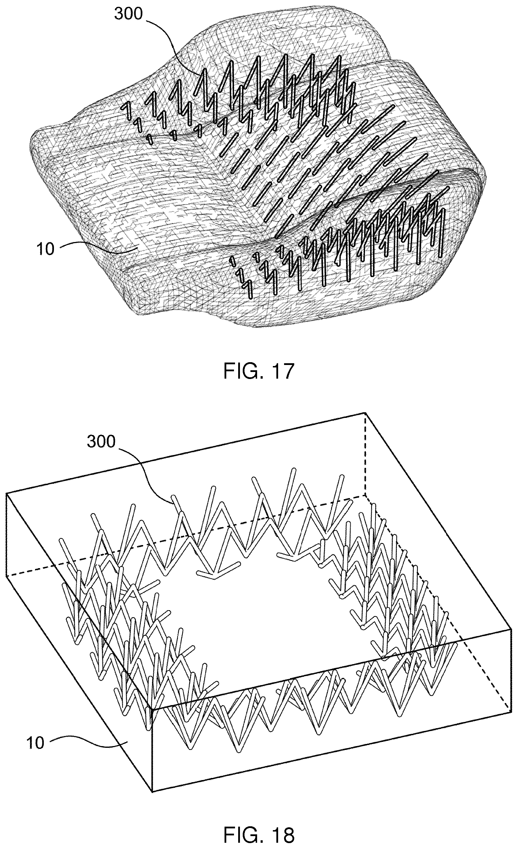

FIG. 17 zeigt ein Sitzpolster, wie es als Sitzfläche in einem Fahrzeugsitz eingesetzt werden kann. Der Schaumkörper 10 enthält an den Seitenwangen V-förmig abgewinkelte stabförmige Volumenelemente 300 sowie im Bodenabschnitt lineare stabförmige Volumenelemente. Das Material des Schaumkörpers 10 kann beispielsweise einen Polyurethanschaum umfassen und das Material der Volumina 300 beispielsweise ein duroplastisches oder elastomeres Polyurethan- oder Epoxyharz umfassen. Die linearen stabförmigen Volumenelemente wirken wie im Zusammenhang mit FIG. 10a/10c/10d erläutert. Die Höhe der V-förmig abgewinkelten Volumenelemente 300 in den Seitenwangen steigt mit zunehmendem Abstand nach Außen, so dass ein Gradient der Verformungsneigung erreicht wird. Das Prinzip der Verformung der Seitenwangen unter Beeinflussung durch die V-förmig abgewinkelten Volumenelemente 300 entspricht im Wesentlichen den Ausführungen zu FIG. 11a/b und FIG. 15.

FIG. 18 zeigt einen Schaumkörper 10, der interne Strukturen in Form miteinander verbundener, jeweils die Kanten einer Pyramide bildenden stabförmigen Volumina 300 aufweist. Die Pyramiden können beispielsweise eine dreieckige, viereckige oder fünfeckige Basis aufweisen. Das Material des Schaumkörpers 10 kann beispielsweise einen Polyurethanschaum umfassen und das Material der Volumina 300 beispielsweise ein duroplastisches oder elastomeres Polyurethan- oder Epoxyharz umfassen. Der Winkel zwischen benachbarten, V-förmig angeordneten Paaren der Volumina 300 kann beispielsweise 5° bis 85°, vorzugsweise 15° bis 60°, betragen. Weiterhin weist die Basis der Pyramiden in Richtung der Oberfläche, welche mit einer auf den Schaumkörpern 10 sitzenden Person in Kontakt steht oder stehen würde. Die Länge der abgewinkelten Volumenelemente 300 steigt mit zunehmendem Abstand von der Schaumkörpermitte, so dass ein Gradient der Verformungsneigung erreicht wird Eine Anwendung für derartig funktionalisierte Schaumkörper liegt in Sitzpolstern.

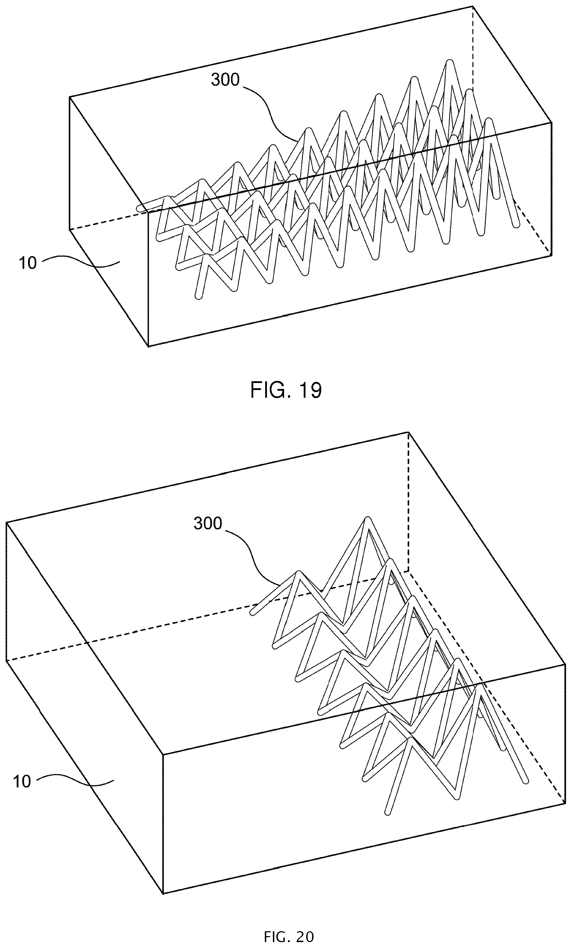

Das gleiche Prinzip der variierenden Kantenlänge der Pyramiden in Kombination mit einer Variation der Kantenwinkel der Pyramiden zur Beeinflussung der Verformung des Schaumkörpers ist auch in den in FIG. 19 und FIG. 20 abgebildeten Schaumkörpern 10 realisiert. Gezeigt wird jeweils ein Schaumkörper 10, der interne Strukturen in Form miteinander verbundener, jeweils die Kanten einer Pyramide bildenden stabförmigen Volumina 300 aufweist. Die Pyramiden können beispielsweise eine dreieckige, viereckige oder fünfeckige Basis aufweisen. Das Material der Schaumkörper 10 kann beispielsweise einen Polyurethanschaum umfassen und das Material der Volumina 300 beispielsweise ein duroplastisches oder elastomeres Polyurethan- oder Epoxyharz umfassen. Der Winkel zwischen benachbarten, V-förmig angeordneten Paaren der Volumina 300 kann beispielsweise 5° bis 85°, vorzugsweise 15° bis 60°, betragen. Eine Anwendung für derartig funktionalisierte Schaumkörper liegt in Sitzpolstern.

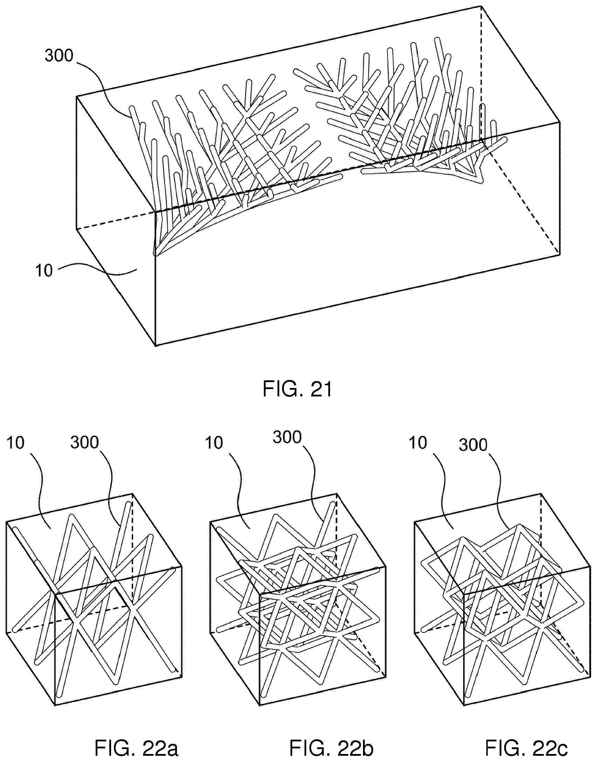

FIG. 21 zeigt einen Schaumkörper 10, der interne Strukturen in Form miteinander verbundener, stabförmigen Volumina 300 aufweist. Die Verbindung der stabförmigen Volumina 300 untereinander kann als Baumstruktur beschrieben werden. Denkbar sind unter anderem binäre, ternäre und quaternäre Baumstrukturen. Das Material des Schaumkörpers 10 kann beispielsweise einen Polyurethanschaum umfassen und das Material der Volumina 300 beispielsweise ein duroplastisches oder elastomeres Polyurethan- oder Epoxyharz umfassen. Die Wurzel der Baumstrukturen ist vorzugsweise derjenigen Oberfläche abgewendet, welche mit einer auf den Schaumkörpern 10 sitzenden Person in Kontakt steht oder stehen würde. Auf diese Weise können die Verästelungen der Baumstrukturen Lasten aufnehmen und in Richtung ihrer Wurzeln kontrolliert einleiten. Eine Anwendung für derartig funktionalisierte Schaumkörper liegt in Sitzpolstern.

Über die räumliche Dichte von Knotenpunkten lässt sich das Kompressionsverhalten der Schaumkörper ebenfalls steuern. FIG. 22a bis FIG. 22c zeigen Schaumkörper 10, in denen die Dichte von Knotenpunkten immer weiter zunimmt und daher die zur Kompression nötige einwirkende Kraft immer größer wird. Das Material der Schaumkörper 10 kann beispielsweise einen Polyurethanschaum umfassen und das Material der miteinander verbundenen stabförmigen Volumina 300 beispielsweise ein duroplastisches oder elastomeres Polyurethan- oder Epoxyharz umfassen. Eine Anwendung für derartig funktionalisierte Schaumkörper liegt in Sitzpolstern.

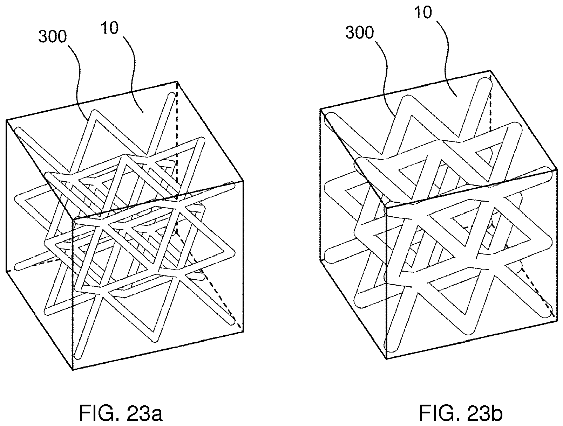

Analog hierzu kann auch über die Dicke der miteinander verbundenen stabförmigen Volumina 300 das Kompressionsverhalten gesteuert werden, wie in FIG. 23a und FIG. 23b dargestellt ist. Diese Figuren zeigen Schaumkörper 10, in denen bei der gleichen räumlichen Dichte an Knotenpunkten die Dicke der miteinander verbundenen stabförmigen Volumina 300 verschieden ist und daher die zur Kompression nötige einwirkende Kraft immer größer wird. Das Material der Schaumkörper 10 kann beispielsweise einen Polyurethanschaum umfassen und das Material der miteinander verbundenen stabförmigen Volumina 300 beispielsweise ein duroplastisches oder elastomeres Polyurethan- oder Epoxyharz umfassen. Eine Anwendung für derartig funktionalisierte Schaumkörper liegt in Sitzpolstern.

## Patentansprüche

1. Verfahren zur Herstellung eines eine interne Struktur (100, 200, 300) aufweisenden Schaumkörpers (10), umfassend die Schritte:
I) Auswählen einer in dem Schaumkörper (10) zu bildenden internen Struktur (100, 200, 300), wobei die Struktur ein erstes polymeres Material umfasst;
II) Bereitstellen eines Schaumkörpers (10), wobei der Schaumkörper (10) ein zweites polymeres Material umfasst, welches von dem ersten polymeren Material verschieden ist;
III) Injektion, mittels eines Injektionsmittels (20), einer vorbestimmten Menge einer Schmelze des ersten polymeren Materials oder einer vorbestimmten Menge einer zu dem ersten polymeren Material reagierenden Reaktionsmischung (30, 21, 32) an einen vorbestimmten Ort innerhalb des Schaumkörpers (10), entsprechend einem Volumenelement der internen Struktur (100, 200, 300);
IV) Wiederholen des Schritts III) für weitere vorbestimmte Orte innerhalb des Schaumkörpers (10), entsprechend weiteren Volumenelementen der internen Struktur (10), bis die interne Struktur (10) gebildet ist,
wobei die Injektion in Schritt III) nicht in im Schaum des Schaumkörpers (10) bereits vorliegende, der Form des Volumenelements oder der internen Struktur (100, 200, 300) entsprechende Hohlräume erfolgt.

2. Verfahren gemäß Anspruch 1, durch gekennzeichnet, dass in zwei aufeinanderfolgenden Schritten III) die injizierten Schmelzen oder die injizierten Reaktionsmischungen (30, 31, 32) sich zumindest teilweise zu einem gemeinsamen Volumenelement miteinander verbinden.

3. Verfahren gemäß Anspruch 1 oder 2, durch gekennzeichnet, dass eine Mehrzahl von voneinander verschiedenen ersten polymeren Materialien eingesetzt wird.

4. Verfahren gemäß einem der Ansprüche 1 bis 3, durch gekennzeichnet, dass eine Mehrzahl von in ihrem mechanischen Aufbau voneinander verschiedenen Injektionsmitteln (20) eingesetzt wird.

5. Verfahren gemäß einem der Ansprüche 1 bis 4, durch gekennzeichnet, dass der Schaumkörper (10) einen Weichschaum mit einer Stauchhärte (40% Stauchung, DIN EN ISO 3386-1:2010-09) von ≥ 10 bis ≤ 100 kPa und einer Dichte (DIN EN ISO 845) von ≥ 10 kg/m³ bis ≤ 100 kg/m³ umfasst.

6. Verfahren gemäß einem der Ansprüche 1 bis 4, durch gekennzeichnet, dass das zweite polymere Material ein Polyurethanpolymer ist.

7. Verfahren gemäß einem der Ansprüche 1 bis 6, durch gekennzeichnet, dass die in Schritt I) ausgewählte interne Struktur (100, 200, 300) eine Blattfeder, Spiralfeder, Elliptikfeder, Parabelfeder, Wellenfeder, Schenkelfeder, Stabfeder, Schraubenfeder, Tellerfeder, ein Gewinde oder eine Aufnahme für Bajonettverschlüsse ist.

8. Verfahren gemäß einem der Ansprüche 1 bis 6, **dadurch gekennzeichnet, dass** die in Schritt I) ausgewählte interne Struktur (100, 200, 300) eine Mehrzahl von nicht miteinander verbundenen kugelförmigen, elliptischen oder stabförmigen Volumina oder eine Mehrzahl von miteinander verbundenen kugelförmigen, elliptischen oder stabförmigen Volumina ist.

9. Verfahren gemäß einem der Ansprüche 1 bis 8, durch gekennzeichnet, dass das erste polymere Material ein Polyurethanpolymer ist.

10. Verfahren gemäß einem der Ansprüche 1 bis 9, durch gekennzeichnet, dass eine Mehrzahl von Schritten III) parallel durchgeführt wird.

11. Verfahren gemäß einem der Ansprüche 1 bis 10, durch gekennzeichnet, dass die vorbestimmte Menge in Schritt III) ein Volumen von ≥ 10 µL bis ≤ 1000 mL aufweist.

12. Verfahren gemäß einem der Ansprüche 1 bis 11, durch gekennzeichnet, dass in Schritt III) das Injektionsmittel (20) eine Kanüle ist, das Ende der Kanüle zur Injektion der vorbestimmten Menge an den vorbestimmten Ort des Schaumkörpers (10) bewegt wird und die Bewegung des Endes der Kanüle so durchgeführt wird, dass bereits im Schaumkörper (10) vorliegendes erstes polymeres Material nicht von der Kanüle kontaktiert wird.

13. Verfahren gemäß einem der Ansprüche 1 bis 12, durch gekennzeichnet, dass nach Bildung der internen Struktur (100, 200, 300) ein Material abtragender Nachbearbeitungsschritt am die interne Struktur (100, 200, 300) aufweisenden Schaumkörper (10) durchgeführt wird.

14. Interne Struktur (100, 200, 300) aufweisender Schaumkörper (10), erhältlich durch ein Verfahren gemäß einem der Ansprüche 1 bis 14, wobei die interne Struktur (100, 200, 300) ein erstes polymeres Material umfasst und der Schaumkörper (10) ein zweites polymeres Material umfasst und das Material der internen Struktur (100, 200, 300) von dem Material des Schaumkörpers (10) verschieden ist, **dadurch gekennzeichnet, dass** sämtliche Oberflächen der internen Struktur (100, 200, 300) den Schaumkörper (10) kontaktieren, die interne Struktur (100, 200, 300) eine Feder mit einer Belastungsrichtung ist und dass bei Belastung des Schaumkörpers (10) an einem Ort, an dem die interne Struktur (100, 200, 300) vorliegt und entlang der Belastungsrichtung der internen Struktur (100, 200, 300) die ermittelte Stauchhärte (40% Stauchung, DIN EN ISO 3386-1:2010-09) ≥ 10% bis ≤ 10000% höher ist als die Stauchhärte (40% Stauchung, DIN EN ISO 3386-1:2010-09) des Schaumkörpers (10) an einem Ort, an dem keine interne Struktur (100, 200, 300) vorliegt.

## Claims

1. Process for producing a foam body (10) having an internal structure (100, 200, 300), comprising the steps of:
I) selecting an internal structure (100, 200, 300) to be formed in the foam body (10), wherein the structure comprises a first polymeric material;
II) providing a foam body (10), wherein the foam body (10) comprises a second polymeric material distinct from the first polymeric material;
III) injecting by means of an injection means (20) a predetermined amount of a melt of the first polymeric material or a predetermined amount of a reaction mixture (30, 21, 32) which reacts to afford the first polymeric material at a predetermined location inside the foam body (10) which corresponds to a volume element of the internal structure (100, 200, 300);
IV) repeating step III) for further predetermined locations inside the foam body (10) corresponding to further volume elements of the internal structure (10) until the internal structure (10) is formed,
wherein the injecting in step III) is not carried out into cavities already present in the foam of the foam body (10) and corresponding to the shape of the volume element or the internal structure (100, 200, 300).

2. Process according to Claim 1, **characterized in that** the injected melts or the injected reaction mixtures (30, 31, 32) become at least partially interconnected to afford a common volume element in two consecutive steps III).

3. Process according to Claim 1 or 2, **characterized in that** a plurality of different first polymeric materials are employed.

4. Process according to any of Claims 1 to 3, **characterized in that** a plurality of injection means (20) differing in their mechanical construction are employed.

5. Process according to any of Claims 1 to 4, **characterized in that** the foam body (10) comprises a flexible foam having a compressive strength (40% compression, DIN EN ISO 3386-1:2010-09) of ≥ 10 to ≤ 100 kPa and a density (DIN EN ISO 845) of ≥ 10 kg/m³ to ≤ 100 kg/m³.

6. Process according to any of Claims 1 to 4, **characterized in that** the second polymeric material is a polyurethane polymer.

7. Process according to any of Claims 1 to 6, **characterized in that** the internal structure (100, 200, 300) selected in step I) is a leaf spring, spiral spring, elliptical spring, parabolic spring, wave spring, leg spring, rod spring, coil spring, disk spring, a thread or a socket for bayonet mounts.

8. Process according to any of Claims 1 to 6, **characterized in that** the internal structure (100, 200, 300) selected in step I) is a plurality of non-interconnected spherical, elliptical or rod-shaped volumes or a plurality of interconnected spherical, elliptical or rod-shaped volumes.

9. Process according to any of Claims 1 to 8, **characterized in that** the first polymeric material is a polyurethane polymer.

10. Process according to any of Claims 1 to 9, **characterized in that** a plurality of steps III) are performed simultaneously.

11. Process according to any of Claims 1 to 10, **characterized in that** the predetermined amount in step III) has a volume of ≥ 10 µL to ≤ 1000 mL.

12. Process according to any of Claims 1 to 11, **characterized in that** the injection means (20) in step III) is a cannula, the end of the cannula is moved to the predetermined location of the foam body (10) for injection of the predetermined amount and the movement of the end of the cannula is performed such that first polymeric material already present in the foam body (10) is not contacted by the cannula.

13. Process according to any of Claims 1 to 12, **characterized in that** formation of the internal structure (100, 200, 300) is followed by performance of a material-removing aftertreatment step on the foam body (10) having the internal structure (100, 200, 300)

14. Foam body (10) having an internal structure (100, 200, 300) obtainable by a process according to any of Claims 1 to 13, wherein the internal structure (100, 200, 300) comprises a first polymeric material and the foam body (10) comprises a second polymeric material and the material of the internal structure (100, 200, 300) is distinct from the material of the foam body (10) **characterized in that** all surfaces of the internal structure (100, 200, 300) contact the foam body (10), the internal structure (100, 200, 300) is a spring having a loading direction and that upon stressing of the foam body (10) at a location at which the internal structure (100, 200, 300) is present and along the stressing direction of the internal structure (100, 200, 300) the determined compressive strength (40% compression, DIN EN ISO 3386-1:2010-09) is ≥ 10% to ≤ 10 000% higher than the compressive strength (40% compression, DIN EN ISO 3386-1:2010-09) of the foam body (10) at a location at which no internal structure (100, 200, 300) is present.

## Revendications

1. Procédé de production d'un corps alvéolaire (10) pourvu d'une structure interne (100, 200, 300), le procédé comprenant les étapes suivantes :
I) sélectionner une structure interne (100, 200, 300) à former dans le corps alvéolaire (10), la structure comprenant un premier matériau polymère ;
II) fournir un corps alvéolaire (10), le corps alvéolaire (10) comprenant un deuxième matériau polymère qui est différent du premier matériau polymère ;
III) injecter, au moyen d'un agent d'injection (20), une quantité prédéterminée d'une matière fondue du premier matériau polymère ou une quantité prédéterminée d'un mélange réactionnel (30, 21, 32), qui réagit au premier matériau polymère, à un emplacement prédéterminé, correspondant à un élément de volume de la structure interne (100, 200, 300), à l'intérieur du corps alvéolaire (10) ;
IV) répéter l'étape III) pour d'autres emplacements prédéterminés, correspondant à d'autres éléments de volume de la structure interne (10), à l'intérieur du corps alvéolaire (10) jusqu'à ce que la structure interne (10) soit formée,
l'injection à l'étape III) n'étant pas effectuée dans des cavités qui sont déjà présentes dans la mousse du corps alvéolaire (10) et qui correspondent à la forme de l'élément de volume ou de la structure interne (100, 200, 300).

2. Procédé selon la revendication 1, **caractérisé en ce qu'**en deux étapes III) successives les matières fondues injectées ou les mélanges réactionnels injectés (30, 31, 32) se combinent au moins partiellement pour former un élément de volume commun.

3. Procédé selon la revendication 1 ou 2, **caractérisé en ce qu'**une pluralité de premiers matériaux polymères différents les uns des autres sont utilisés.

4. Procédé selon l'une des revendications 1 à 3, **caractérisé en ce qu'**une pluralité de moyens d'injection (20) sont utilisés, qui diffèrent les uns des autres par leur structure mécanique.

5. Procédé selon l'une des revendications 1 à 4, **caractérisé en ce que** le corps alvéolaire (10) est une mousse souple ayant une dureté à la compression (compression de 40 %, DIN EN ISO 3386-1:2010-09) ≥ 10 et ≤ 100 kPa et une densité (DIN EN ISO 845) ≥ 10 kg/m³ et ≤ 100 kg/m³.

6. Procédé selon l'une des revendications 1 à 4, **caractérisé en ce que** le deuxième matériau polymère est un polymère polyuréthanne.

7. Procédé selon l'une des revendications 1 à 6, **caractérisé en ce que** la structure interne (100, 200, 300) choisie à l'étape I) est un ressort à lame, un ressort spiral, un ressort elliptique, un ressort parabolique, un ressort ondulé, un ressort à branches, un ressort à barres, un ressort hélicoïdal, un ressort plat, un filetage ou un réceptacle pour fermetures à baïonnette.

8. Procédé selon l'une des revendications 1 à 6, **caractérisé en ce que** la structure interne (100, 200, 300) choisie à l'étape I) présente une pluralité de volumes sphériques, elliptiques ou en forme de barre non reliés entre eux ou une pluralité de volumes sphériques, elliptiques ou en forme de barre reliés entre eux.

9. Procédé selon l'une des revendications 1 à 8, **caractérisé en ce que** le premier matériau polymère est un polymère polyuréthane.

10. Procédé selon l'une des revendications 1 à 9, **caractérisé en ce qu'**une pluralité d'étapes III) sont réalisées en parallèle.

11. Procédé selon l'une des revendications 1 à 10, **caractérisé en ce que** la quantité prédéterminée à l'étape III) a un volume ≥ 10 µl et ≤ 1000 ml.

12. Procédé selon l'une des revendications 1 à 11, **caractérisé en ce qu'**à l'étape III) le moyen d'injection (20) est une canule, l'extrémité de la canule destinée à l'injection de la quantité prédéterminée est déplacée vers l'emplacement prédéterminé du corps alvéolaire (10) et le déplacement de l'extrémité de la canule est effectué de telle manière que le premier matériau polymère déjà présent dans le corps alvéolaire (10) ne soit pas en contact avec la canule.

13. Procédé selon l'une des revendications 1 à 12, **caractérisé en ce qu'**après formation de la structure interne (100, 200, 300) une étape de post-traitement d'enlèvement de matériau est réalisée sur le corps alvéolaire (10) comportant la structure interne (100, 200, 300).

14. Corps alvéolaire (10) comportant une structure interne (100, 200, 300), lequel peut être obtenu par un procédé selon l'une des revendications 1 à 13,
la structure interne (100, 200, 300) comprenant un premier matériau polymère et le corps alvéolaire (10) comprenant un deuxième matériau polymère et le matériau de la structure interne (100, 200, 300) étant différent du matériau du corps alvéolaire (10), **caractérisé en ce que** toutes les surfaces de la structure interne (100, 200, 300) sont en contact avec le corps alvéolaire (10), la structure interne (100, 200, 300) est un ressort ayant une direction de charge et **en ce que**, lorsque le corps alvéolaire (10) est contraint à un emplacement où la structure interne (100, 200, 300) est présente et le long de la direction de contrainte de la structure interne (100, 200, 300), la dureté de compression déterminée (compression de 40 %, DIN EN ISO 3386-1:2010-09) est ≥ 10 % et ≤ 10000 % par rapport à la dureté à la compression (compression de 40 %, DIN EN ISO 3386-1:2010-09) du corps alvéolaire (10) à un emplacement où il n'y a pas de structure interne (100, 200, 300).
